(19) Europäisches Patentamt
European Patent Office
Office européen des brevets

(11) EP 0 659 756 B1

(12) # EUROPÄISCHE PATENTSCHRIFT

(45) Veröffentlichungstag und Bekanntmachung des Hinweises auf die Patenterteilung:
**03.04.2002 Patentblatt 2002/14**

(51) Int Cl.[7]: **C07F 17/00**, C08F 10/00, C08F 4/642

(21) Anmeldenummer: **94120068.5**

(22) Anmeldetag: **19.12.1994**

(54) **Metallocenverbindung**

Metallocenes

Métallocènes

(84) Benannte Vertragsstaaten:
**BE DE FR IT**

(30) Priorität: **27.12.1993 DE 4344688**

(43) Veröffentlichungstag der Anmeldung:
**28.06.1995 Patentblatt 1995/26**

(73) Patentinhaber: **Basell Polyolefine GmbH**
**67056 Ludwigshafen (DE)**

(72) Erfinder:
- **Winter, Andreas, Dr.**
  **D-61479 Glashütten (DE)**
- **Küber, Frank, Dr.**
  **D-61440 Oberursel (DE)**
- **Aulbach, Michael, Dr.**
  **D-65719 Hofheim (DE)**
- **Bachmann, Bernd, Dr.**
  **D-65817 Eppstein (DE)**
- **Klein, Robert, Dr.**
  **D-65933 Frankfurt (DE)**
- **Kühlein, Klaus, Prof. Dr.**
  **D-65779 Kelkheim (DE)**
- **Spaleck, Walter, Dr.**
  **D-65835 Liederbach (DE)**
- **Kohlpaintner, Christian, Dr.**
  **Corpus Christi, Texas 78413 (US)**

(56) Entgegenhaltungen:
**EP-A- 0 498 675** **EP-A- 0 544 308**
**GB-A- 2 241 244**

- **CHEMICAL ABSTRACTS, vol. 120, no. 6, 7. Februar 1994, Columbus, Ohio, US; abstract no. 55292y, MYA, S. ET AL. 'PREPARATION OF HIGHLY SYNDIOTACTIC OLEFIN POLYMERS' Seite 20 ; & JP-A-05 202 124 (CHISSO CORP.; RIKAGAKU KENKYUSHO)**
- **CHEMICAL ABSTRACTS, vol. 119, no. 18, 1. November 1993, Columbus, Ohio, US; abstract no. 181513p, MYAKE, S. 'MANUFACTURE OF BRANCHED POLYETHYLENE AND ORGANOMETALLIC CATALYST COMPONENTS FOR MANUFACTURING THE SAME' Seite 20 ; & JP-A-0 543 619 (SHOWA DENKO KK)**
- **CHEMICAL ABSTRACTS, vol. 118, no. 25, 21. Juni 1993, Columbus, Ohio, US; abstract no. 255065x, LLINAS, G.H. ET AL. 'ETHYLIDENE(1-.ETA.5-T ETRAMETHYLCYCLOPENTADIENYL)(1-.ETA.5-INDEN YL)DICHLOROZIRCONIUM: SYNTHESIS, MOLECULAR STRUCTURE, AND POLYMERIZATION CATALYSIS' Seite 901 ; & ORGANOMETALLICS, Bd.12, Nr.4, 1993 Seiten 1283 - 1288**
- **CHEMICAL ABSTRACTS, vol. 117, no. 14, 5. Oktober 1992, Columbus, Ohio, US; abstract no. 131611g, KAMINSKY, W. ET AL. 'STANDARDIZED POLYMERIZATION OF ETHYLENE AND PROPENE WITH BRIDGED AND UNBRIDGED METALLOCENE DERIVATIVES: A COMPARISON' Seite 3 ; & MAKROMOL. CHEM., Bd.193, Nr.7, 1992 Seiten 1643 - 1651**

EP 0 659 756 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

- **CHEMICAL ABSTRACTS, vol. 116, no. 24, 15. Juni 1992, Columbus, Ohio, US; abstract no. 236227u, HIDALGO LLINAS, G. ET AL. 'COMPARISON OF POLYMERIZATION CATALYZED BY THE SYN AND ANTI DIASTEREOMERS OF (ETHYLIDENE(1-.ETA.5 -TETRAMETHYLCYCLOPENTA-DIENYL)(1-.ETA .5-IN DENYL)TITANIUM DICHLORIDE AND METHYLALUMINOXANE' Seite 4 ; & POLYM. BULL., Bd.28, Nr.1, 1992 Seiten 41 - 45**
- **CHEMICAL ABSTRACTS, vol. 121, no. 26, 26. Dezember 1994, Columbus, Ohio, US; abstract no. 301410t, FIERRO, R. ET AL. 'ASYMMETRIC ZIRCONOCENE PRECURSORS FOR CATALYSIS OF PROPYLENE POLYMERIZATION' Seite 5 ; & J. POLYM. SCI., PART A: POLYM. CHEM., Bd.32, Nr.15, 1994 Seiten 2817 - 2824**

Bemerkungen:

Die Akte enthält technische Angaben, die nach dem Eingang der Anmeldung eingereicht wurden und die nicht in dieser Patentschrift enthalten sind.

## Beschreibung

Die Erfindung bezieht sich auf eine Metallocenverbindung, die vorteilhaft zur Herstellung von Polyolefinen eingesetzt werden kann, die ein breites Eigenschafts-Spektrum abdecken. Außerdem besitzt die erfindungsgemäße Metallocenverbindung im technisch interessanten Temperaturbereich eine hohe Polymerisationsaktivität.

Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in ein Kation überführen und stabilisieren können, bekannt.

Beispielsweise wurde eine spezielle Voraktivierungsmethode des Metallocens mit einem Aluminoxan vorgeschlagen, welche zu einer Steigerung der Aktivität des Katalysatorsystems und zu einer deutlichen Verbesserung der Kornmorphologie des Polymeren führt (vgl. EP 0 302 424). Die Voraktivierung erhöht zwar die Molmasse, jedoch ist keine wesentliche Steigerung erreichbar.
Eine weitere, aber noch nicht ausreichende, Steigerung der Molmasse konnte durch Verwendung speziell heteroatomverbrückter Metallocene bei hoher Metallocenaktivität realisiert werden (EP-A 0 336 128).

Weiterhin sind Katalysatoren auf Basis Ethylenbisindenylhafniumdichlorid und Ethylen-bis(4,5,6,7-tetrahydro-1-indenyl)hafniumdichlorid und Methylaluminoxan bekannt, mit denen durch Suspensionspolymerisation höhermolekulare Polypropylene hergestellt werden können (vgl. J.A. Ewen et al., J. Am. Chem. Soc. 109 (1987) 6544). Unter technisch relevanten Polymerisationsbedingungen ist jedoch die Kornmorphologie der derart erzeugten Polymeren nicht befriedigend und die Aktivität der eingesetzten Katalysatoren vergleichsweise gering. Verbunden mit den hohen Katalysatorkosten ist somit mit diesen Systemen eine kostengünstige Polymerisation nicht möglich.

Eine deutliche Steigerung der Molmasse konnte durch die Verwendung von Metallocenen erreicht werden, bei denen die durch eine Brücke fixierten aromatischen π-Liganden in 2-Stellung (EP 485 822) oder in 2- und 4,6-Stellung (EP 545 303) Substituenten tragen.

Unter dem Zwang großtechnisch kostengünstiger Produktion muß bei möglichst hohen Reaktionstemperaturen polymerisiert werden, da bei höheren Polymerisationstemperaturen die entstehende Polymerisationswärme mit weniger Kühlmedium abgeführt werden kann und daher mit einer deutlich geringeren Dimensionierung des Kühlwasserkreislaufes realisierbar ist.

Die letztgenannten Metallocene mit Substituenten in 2- bzw. 4- und 6-Stellung zur Brücke sind in dieser Hinsicht bei 70°C Polymerisationstemperatur bereits sehr leistungsfähig, trotzdem sind die erzielbaren Molmassen bei technisch relevanten Polymerisationstemperaturen (z.B. 70°C) für einige technische Anwendungen wie beispielsweise die Herstellung von Polymeren für Rohre und Großhohlkörper sowie spezielle Fasern noch zu gering.

Metallocene mit zwei substituierten Cyclopentadienyl-π-Liganden wie etwa Dimethylsilandiyl(2-methyl-4-t-butyl-1-cyclopentadienyl)$_2$ZrCl$_2$ wurden ebenfalls als Polymerisationskatalysatoren vorgeschlagen (H.-H. Brintzinger et al., Angew. Chem. 102 (1990) 339). Diese Systeme überzeugen jedoch bezüglich erzielbarer Polymermolmasse, Stereospezifität oder Polymerschmelzpunkt in keiner Weise, darüberhinaus ist ihre Polymerisationsaktivität sehr niedrig und die notwendige Trennung der ex Synthese anfallenden meso- und rac-Formen - nur mit der rac-Form ist hochisotaktisches Polyolefin herstellbar - ist sehr schwierig. Ferner fällt die meso-Form etwa in gleicher Menge wie die rac-Form an, was bedeutet, daß die Hälfte der eingesetzten Chemikalien entsorgt werden müssen und nur die Hälfte des Produktes nutzbar ist.

In EPA 0 544 308 werden Katalysatoren mit zwei verschiedenen π-Liganden wie etwa Isopropyliden(4-methyl-1-cyclopentadienyl)(3-t-butyl-1-indenyl)ZrCl$_2$ vorgeschlagen, die aufgrund ihrer Asymmetrie a priori keine meso-Form besitzen und somit das rac/meso-Trennungsproblem umgehen, die Defizite bezüglich Polymereigenschaften und Katalysatoraktivität konnten jedoch nicht gelöst werden.

Diese Metallocene sind im übrigen nicht in 2-Stellung und/oder am Benzoaromaten des Indenylrests substituiert. Das gleiche gibt für die in GB-A-2 241 244 offenbarten Metallocene.

Aus Arbeiten von Ewen et al. (J. Am. chem. Soc. 110 (1988) 6255) sind ebenfalls Katalysatoren mit zwei unterschiedlichen π-Liganden wie etwa Isopropyliden(cyclopentadienyl)(fluorenyl)ZrCl$_2$ bekannt. Diese asymmetrischen Verbindungen erzeugen jedoch syndiotaktische Polyolefine. Die Herstellung von isotaktischen Polyolefinen ist damit nicht möglich.

Es bestand somit die Aufgabe, ein Katalysatorsystem zur Verfügung zu stellen, welches die Nachteile des Standes der Technik vermeidet und insbesondere bei technisch relevanten Polymerisationstemperaturen mit hoher Polymerisationsaktivität isotaktische Polyolefine liefert, die ein breites Eigenschafts-spektrum, insbesondere an Molekulargewichten und Isotaktizitäten, abdecken.

Es wurde gefunden, daß durch eine Metallocenverbindung mit zwei voneinander verscheidenen π-Liganden, die in ganz bestimmter Weise substituiert sind, diese Aufgabe gelöst werden kann.

Aufgrund ihres chemischen Aufbaus besitzen die erfindungsgemäßen Metallocene keine meso-Form, welche in kostenintensiver Weise abgetrennt werden müßte, da mit meso-Formen nur ataktisches Polyolefin hergestellt werden kann.

Darüberhinaus ist es mit dem vorgeschlagenen Metallocenkatalysatorkonzept möglich, durch Kombination weniger unterschiedlicher π-Liganden eine kostengünstig herzustellende Palette von Polymerisationskatalysatoren für die unterschiedlichsten Polymerisations- und Produktanforderungen bereitzustellen.

Die Erfindung betrifft somit eine Metallocenverbindung der Formel I

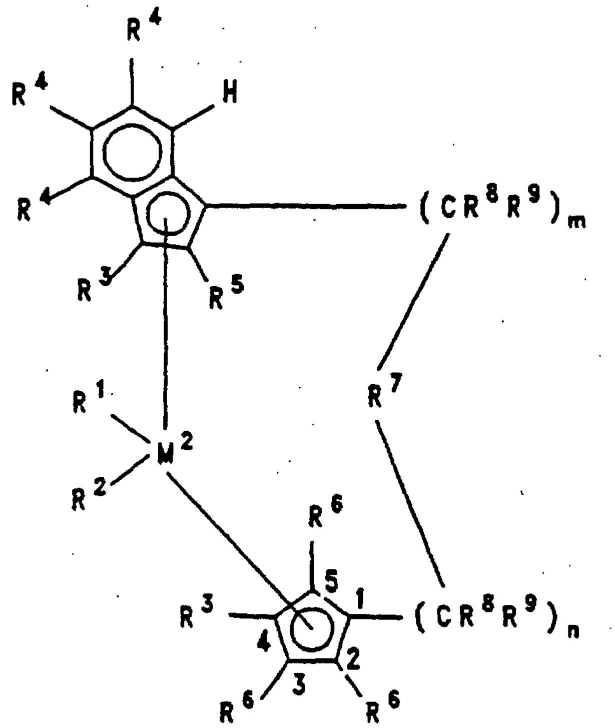

(I)

worin

| | |
|---|---|
| $M^2$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^4$ | gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, oder zwei oder mehr Reste $R^4$ zusammen mit den sie verbindenden Atomen ein Ringsystem bilden, |
| $R^5$ | ein Wasserstoffatom, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^6$ | gleich oder verschieden sind und ein Wasserstoffatom, ein Halogenatom, eine $C_1$-$C_{20}$-Alkylgruppe, die halogeniert sein kann, eine $C_6$-$C_{30}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, |

einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist,

$R^7$

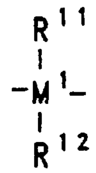 , 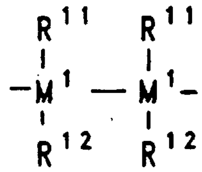 , 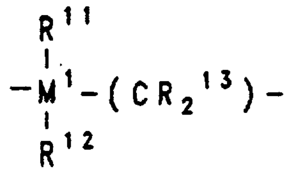 , 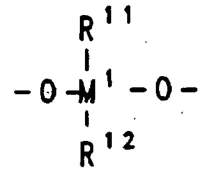 ,

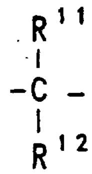 , 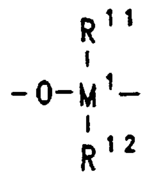 ,

$=BR^{11}$, $= AlR^{11}$, -Ge-, -Sn-, -O-, -S-, =SO, $= SO_2$, $=NR^{11}$, =CO, $=PR^{11}$ oder $=P(O)R^{11}$ ist,

wobei $R^{11}$, $R^{12}$ und $R^{13}$ gleich oder verschieden sind und ein Wasserstoffatom, ein Halogenatom, eine $C_1$-$C_{20}$-Alkylgruppe, $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^1$ Silizium, Germanium oder Zinn ist,

$R^8$ und $R^9$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^8$ und $R^9$ jeweils mit den sie verbindenden Atomen einen Ring bilden,

m und n gleich oder verschieden sind und null, 1 oder 2 sind, wobei m plus n null, 1 oder 2 ist, dadurch gekennzeichnet, daß von den Resten $R^4$ und $R^5$ mindestens einer von Wasserstoff verschieden ist.

Alkyl steht für geradkettiges oder verzweigtes Alkyl. Halogen (halogeniert) bedeutet Fluor, Chlor, Brom oder Jod, bevorzugt Fluor oder Chlor. Reste mit gleicher Indizierung können unterschiedlich sein.

$M^2$ ist ein Metall der Gruppen IVb, Vb oder VIb des Periodensystems, beispielsweise Titan, Zirkon, Hafnium, Vanadium, Niob, Tantal, Chrom, Molybdän, Wolfram, vorzugsweise Zirkon, Hafnium, Titan, besonders bevorzugt Zr.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ ist Wasserstoff, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe, ein $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist, besonders bevorzugt ist $R^3$ Wasserstoff.

Die Reste $R^4$ sind gleich oder verschieden und bedeuten ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkyl-Gruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe, eine $C_7$-$C_{40}$-, vorzugsweise $C_7$-$C_{22}$-Alkylarylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein

Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist, oder zwei oder mehr Reste $R^4$ zusammen mit den sie verbindenden Atomen bilden ein Ringsystem, welches ein- oder mehrkernig ist.

$R^5$ ist ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe, einen $-NR_2^{10}$, $-SR^{10}$, $-OSiR_3^{10}$, $-OR^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist.

$R^6$ ist ein Wasserstoffatom, ein Halogenatom, bevorzugt ein Fluor-, Chlor- oder Bromatom, eine $C_1$-$C_{20}$-, vorzugsweise $C_1$-$C_{10}$-Alkylgruppe, die halogeniert sein kann, eine $C_6$-$C_{30}$-, vorzugsweise $C_6$-$C_{20}$-Arylgruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe, einen $-NR_2^{10}$, $-SR^{10}$, $-OSiR_3^{10}$, $-OR^{10}$, $-SiR_3^{10}$ oder
$-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist.

$R^7$ ist

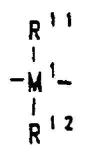 , 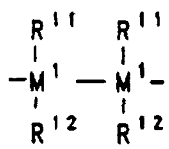 , 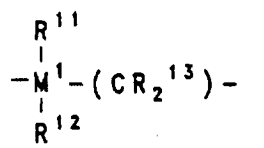 , 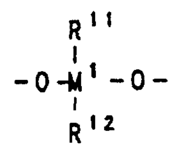 ,

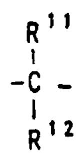 , 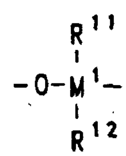 ,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$,
wobei $R^{11}$, $R^{12}$ und $R^{13}$ gleich oder verschieden sind und ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkylgruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe oder eine $C_7$-$C_{40}$-, vorzugsweise $C_7$-$C_{22}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^1$ ist Silizium, Germanium oder Zinn, bevorzugt Silizium oder Germanium.

$R^7$ ist vorzugsweise $= CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und sind ein Wasserstoffatom, ein Halogenatom, eine $C_1$-$C_{20}$-, vorzugsweise $C_1$-$C_{10}$-Alkylgruppe, eine $C_1$-$C_{20}$-Fluoralkylgruppe, vorzugsweise $C_1$-$C_{10}$-Fluoralkylgruppe, eine $C_6$-$C_{30}$-, vorzugsweise $C_6$-$C_{20}$-Arylgruppe, eine $C_6$-$C_{30}$-Fluorarylgruppe, vorzugsweise eine $C_6$-$C_{20}$-Fluorarylgruppe, eine $C_1$-$C_{20}$-, vorzugsweise $C_1$-$C_{10}$-Alkoxygruppe, eine $C_2$-$C_{20}$-, vorzugsweise $C_2$-$C_{10}$-Alkenylgruppe, eine $C_7$-$C_{40}$-, vorzugsweise $C_7$-$C_{20}$-Arylalkylgruppe, eine $C_8$-$C_{40}$-, vorzugsweise $C_8$-$C_{22}$-Arylalkenylgruppe oder eine $C_7$-$C_{40}$-, vorzugsweise $C_7$-$C_{22}$-Alkylarylgruppe, oder $R^8$ und $R^9$ bilden jeweils zusammen mit den sie verbindenden Atomen einen Ring.

m und n sind gleich oder verschieden und bedeuten null, 1 oder 2, bevorzugt null oder 1, wobei m plus n null, 1 oder 2, bevorzugt null oder 1 ist.

Der Cyclopentadienylligand weist bevorzugt einen von Wasserstoff verschiedenen Rest an zumindest einer der zur Brücke $-(CR^8R^9)_n-R^7-(CR^8R^9)_m$-benachbarten Positionen (2- oder 5-Position) auf, wenn das Metallocen zur Herstellung hochmolekularer hochisotaktischer Polyolefin eingesetzt werden soll. Zur Herstellung von niedermolekularen niederisotaktischen Polyolefinen ist der Cyclopentadienylligand bevorzugt unsubstituiert oder nur in 3-Position substituiert.

Bevorzugte Metallocene der Formel (I) zur Herstellung hochmolekularer, hochisotaktischer Polyolefine sind

solche, bei denen in Formel (I)

$M^2$ Zirkon ist,
$R^1$ und $R^2$ gleich oder verschieden sind und Methyl oder Chlor sind,
$R^3$ ein Wasserstoffatom ist,
$R^4$ ein Wasserstoffatom, eine $C_1$-$C_{20}$-Alkylgruppe oder eine $C_6$-$C_{30}$-Arylgruppe ist, oder zwei oder mehr Reste $R^4$ zusammen mit den sie verbindenden Atomen ein Ringsystem bilden,
$R^5$ ein Wasserstoffatom oder eine $C_1$-$C_{10}$-, vorzugsweise $C_1$-$C_4$-Alkylgruppe, ist,
$R^6$ ein Wasserstoffatom, eine $C_1$-$C_{10}$-Alkylgruppe, eine $C_6$-$C_{20}$-Arylgruppe oder einen Rest $SiR^{10}_3$, worin $R^{10}$ eine $C_1$-$C_{10}$-Alkylgruppe ist, bedeutet,
$R^7$ einen Rest

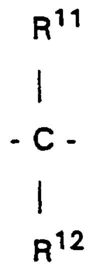 , 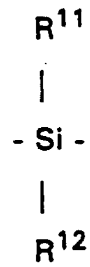 oder 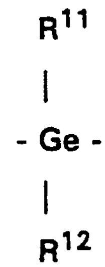

bedeutet, worin $R^{11}$ und $R^{12}$ gleich oder verschieden sind und eine $C_1$-$C_{20}$-Alkylgruppe oder eine $C_6$-$C_{30}$-Arylgruppe sind, $R^8$ und $R^9$ gleich oder verschieden sind und ein Wasserstoffatom oder eine $C_1$-$C_{30}$-Alkylgruppe bedeuten, m plus n null oder 1 bedeutet, und mindestens einer der Reste $R^6$ sowie mindestens einer der Reste $R^5$ und $R^4$ von Wasserstoff verschieden ist, insbesondere solche Verbindungen der Formel (I), bei denen der Indenylligand in 2-, 2,4-, 2,5-, 2,6-, 2,4,6-, 2,4,5-, 2,4,5,6- und 2,5,6-Stellung substituiert ist, und der Cyclopentadienylligand in 2-, 3,5- oder 2,3,5-Stellung substituiert ist,
wobei die Substituenten bevorzugt $C_1$-$C_{10}$-Alkyl-, $C_6$-$C_{20}$-Aryl- oder -$SiR^{10}_3$-Reste, worin $R^{10}$ eine $C_1$-$C_{10}$-Alkylgruppe ist, sind.

Bevorzugte Metallocene der Formel (I) zur Herstellung niedermolekularer, niederisotaktischer Polyolefine sind solche, bei denen in Formel (I)

$M^2$ Zirkon ist,
$R^1$ und $R^2$ gleich oder verschieden sind und Methyl oder Chlor sind,
$R^3$ Wasserstoff ist,
$R^4$ ein Wasserstoffatom, eine $C_1$-$C_{20}$-Alkylgruppe oder eine $C_6$-$C_{30}$-Arylgruppe ist, oder zwei oder mehr Reste $R^4$ zusammen mit den sie verbindenden Atomen ein Ringsystem bilden,
$R^5$ ein Wasserstoffatom oder eine $C_1$-$C_{10}$-, vorzugsweise $C_1$-$C_4$-Alkylgruppe ist, $R^6$ ein Wasserstoffatom, eine $C_1$-$C_{10}$-Alkylgruppe, eine $C_6$-$C_{20}$-Arylgruppe oder einen Rest $SiR^{10}_3$, worin $R^{10}$ eine $C_1$-$C_{10}$-Alkylgruppe ist, bedeutet,
$R^7$ einen Rest

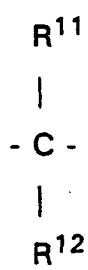 , 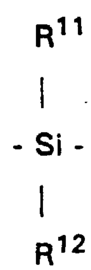 oder 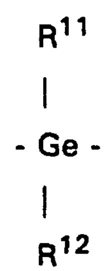

bedeutet, worin $R^{11}$ und $R^{12}$ gleich oder verschieden sind und eine $C_1$-$C_{20}$-Alkylgruppe oder eine $C_6$-$C_{30}$-Arylgruppe sind, $R^8$ und $R^9$ gleich oder verschieden sind und ein Wasserstoffatom oder eine $C_1$-$C_{30}$-Alkylgruppe be-

deuten, m + n null oder 1 bedeutet, und mindestens einer der Reste $R^5$ und $R^4$ von Wasserstoff verschieden ist, insbesondere solche Verbindungen der Formel (I), bei denen der Indenylrest in 2-, 2,4-, 2,5-, 2,6-, 2,4,6-, 2,4,5-, 2,4,5,6- und 2,5,6-Stellung substituiert ist, und der Cyclopentadienylligand unsubstituiert oder nur in 3-Stellung substituiert ist, wobei die Substituenten bevorzugt $C_1$-$C_{10}$-Alkyl-, $C_6$-$C_{20}$-Aryl- oder -$SiR^{10}_3$-Reste, worin $R^{10}$ eine $C_1$-$C_{10}$-Alkylgruppe ist, sind.

Für den Substitutionsort gilt dabei folgende Nomenklatur:

Cyclopentadienylligand:

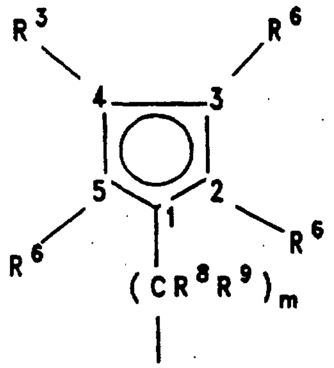

Indenylligand:

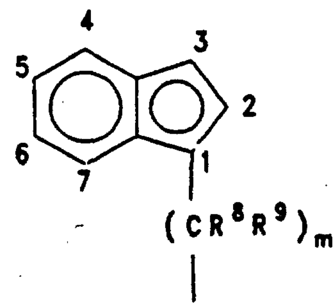

Bevorzugte Verbindungen der Formel (I) zur Herstellung hochmolekularer, hochisotaktischer Polymere bestehen aus folgenden Molekülfragmenten a, b, c und d:

a) -$(CR^8R^9)$m-$R^7$-$(CR^8R^9)_n$- bedeutet:

Dialkylsilandiyl, Alkyl(aryl)silandiyl, 1,2-Ethandiyl, 1,2-Butandiyl,
Diarylsilandiyl, Dialkylmethylen, Diarylmethylen, Alkyl(aryl)methylen,
Alkyl(vinyl)silandiyl. Aryl(vinyl)silandiyl oder Dialkylgermyl;

b) $R^4{}_4R^3R^5$-1-indenyl bedeutet:

2-alkyl-4-aryl-1-indenyl, 2,4-dialkyl-1-indenyl, 2,4-diaryl-1-indenyl, 2,4,6-trialkyl-1-indenyl, 2-alkyl-$\alpha$-acenaphth-1-indenyl, 2-alkyl-4,5-benzo-1-indenyl, 2,5-dialkyl-1-indenyl, 2,6-dialkyl-1-indenyl, 2,5,6-trialkyl-1-indenyl, 2,4,5-trialkyl-1-indenyl, 2-alkyl-1-indenyl, 2-aryl-1-indenyl, 2,6-dialkyl-4-aryl-1-indenyl, 2-alkyl-5-aryl-1-indenyl, 2-alkyl-5,6-diaryl-1-indenyl, 2-alkyl-4,5-diaryl-1-indenyl oder 2-alkyl-4,6-diaryl-1-indenyl;

c) $R^6{}_3R^3$-1-cyclopentadienyl bedeutet:

2-alkyl-1-cyclopentadienyl, 3,5-dialkyl-1-cyclopentadienyl, 2,3,5-trialkyl-1-cyclopentadienyl, 2-Si(trialkyl)-1-cyclopentadienyl, 5-Si(trialkyl)-3-alkyl-1-cyclopentadienyl, 2-Si(trialkyl)-3,5-dialkyl-1-cyclopentadienyl, 5-alkyl-3-aryl-1-cyclopentadienyl, 2,5-dialkyl-3-aryl-1-cyclopentadienyl, 2,3-dialkyl-5-aryl-1-cyclopentadienyl, 2-aryl-1-cyclopentadienyl, 5-aryl-3-alkyl-1-cyclopentadienyl, 5-aryl-2,3-dialkyl-1-cyclopentadienyl oder 5-alkyl-2,3-diaryl-1-cyclopentadienyl.

d) =$MR^1R^2$ bedeutet:

=$ZrCl_2$, =$ZrClCH_3$ oder =$Zr(CH_3)_2$.

Bevorzugte Verbindungen der Formel (I) zur Herstellung niedermolekularer, niederisotaktischer Polymere bestehen aus folgenden Molekülfragmenten a, b, c und d:

a) -$(CR^8R^9)$m-$R^7$-$(CR^8R^9)_n$- bedeutet:

Dialkylsilandiyl, Alkyl(aryl)silandiyl, 1,2-Ethandiyl, 1,2-Butandiyl, Diarylsilandiyl, Dialkylmethylen, Diarylmethylen, Alkyl(aryl)methylen, Alkyl(vinyl)silandiyl. Aryl(vinyl)silandiyl oder Dialkylgermyl;

b) $R^4{}_4R^3R^5$-1-indenyl bedeutet:

2-alkyl-4-aryl-1-indenyl, 2,4-dialkyl-1-indenyl, 2,4-diaryl-1-indenyl, 2,4,6-trialkyl-1-indenyl, 2-alkyl-α-acenaphth-1-indenyl, 2-alkyl-4,5-benzo-1-indenyl, 2,5-dialkyl-1-indenyl, 2,6-dialkyl-1-indenyl, 2,5,6-trialkyl-1-indenyl, 2,4,5-trialkyl-1-indenyl, 2-alkyl-1-indenyl, 2-aryl-1-indenyl, 2,6-dialkyl-4-aryl-1-indenyl, 2-alkyl-5-aryl-1-indenyl, 2-alkyl-5,6-diaryl-1-indenyl, 2-alkyl-4,5-diaryl-1-indenyl oder 2-alkyl-4,6-diaryl-1-indenyl;

c) $R^6{}_3R^3$-1-cyclopentadienyl bedeutet:

3-alkyl-1-cyclopentadienyl, 3-aryl-1-cyclopentadienyl oder 1-cyclopentadienyl.

d) $=MR^1R^2$ bedeutet:

$=ZrCl_2$, $=ZrClCH_3$, $= Zr(CH_3)_2$.

Beispiele für Verbindungen der Formel (I), die sich besonders zur Herstellung hochmolekularer, hochisotaktischer Polymere eignen, sind:

Dimethylsilandiyl(2-methyl-4-phenyl-1-indenyl)(2,3,5-trimethyl-1-cyclopentadienyl)$ZrCl_2$,
Dimethylsilandiyl(2-methyl-4-phenyl-1-indenyl)(2,3,5-trimethyl-1-cyclopentadienyl)ZrMeCl,
Dimethylsilandiyl(2-methyl-4-phenyl-1-indenyl)(2,3,5-trimethyl-1-cyclopentadienyl)$ZrMe_2$,
Dimethylsilandiyl(2-methyl-4-phenyl-1-indenyl)(2-methyl-1-cyclopentadienyl)$ZrCl_2$,
Dimethylsilandiyl(2-methyl-4-phenyl-1-indenyl)(3,5-dimethyl-1-cyclopentadienyl)$ZrCl_2$,
Dimethylsilandiyl(2-methyl-4-phenyl-1-indenyl)(2,5-dimethyl-3-t-butyl-1-cyclopentadienyl)$ZrCl_2$,
1,2-Ethandiyl(2-methyl-4-phenyl-1-indenyl)(2,3,5-trimethyl-1-cyclopentadienyl)$ZrCl_2$,
Phenyl(Methyl)silandiyl(2-methyl-4-phenyl-1-indenyl)(2,3,5-trimethyl-1-cyclopentadienyl)$ZrCl_2$,
Diphenylsilandiyl(2-methyl-4-phenyl-1-indenyl)(2,3,5-trimethyl-1-cyclopentadienyl)$ZrCl_2$,
Dimethylsilandiyl(2-ethyl-4-phenyl-1-indenyl)(2,3,5-trimethyl-1-cyclopentadienyl)$ZrCl_2$,
Dimethylsilandiyl(2,4-diphenyl-1-indenyl)(2,3,5-trimethyl-1-cyclopentadienyl)$ZrCl_2$,
Dimethylsilandiyl(2-ethyl-4-(1-naphthyl)-1-indenyl)(2,3,5-trimethyl-1-cyclopentadienyl)$ZrCl_2$,
Dimethylgermyl(2-methyl-4-phenyl-1-indenyl)(2,3,5-trimethyl-1-cyclopentadienyl)$ZrCl_2$
Methyl(vinyl)silandiyl(2-methyl-4-phenyl-1-indenyl)(2,3,5-trimethyl-1-cyclopentadienyl)$ZrCl_2$
Phenyl(vinyl)silandiyl(2-methyl-4-phenyl-1-indenyl)(2,3,5-trimethyl-1-cyclopentadienyl)$ZrCl_2$
Dimethylgermyl(2-ethyl-4-(1-naphtyl)-1-indenyl)(2,3,5-trimethyl-1-cyclopentadienyl)$ZrCl_2$
Dimethylsilandiyl(2-methyl-4-(1-naphthyl)-1-indenyl)(2,3,5-trimethyl-1-cyclopentadienyl)$ZrCl_2$,
Dimethylsilandiyl(2-methyl-4-(2-naphthyl)-1-indenyl)(2,3,5-trimethyl-1-cyclopentadienyl)$ZrCl_2$,
Dimethylsilandiyl(2-methyl-1-indenyl)(2,3,5-trimethyl-1-cyclopentadienyl)$ZrCl_2$, Dimethylsilandiyl(2-methyl-4-isopropyl-1-indenyl)(2,3,5-trimethyl-1-cyclopentadienyl)$ZrCl_2$,
Dimethylsilandiyl(2-methyl-4,5-benzo-1-indenyl)(2,3,5-trimethyl-1-cyclopentadienyl)$ZrCl_2$,
Dimethylsilandiyl(2-methyl-α-acenaphth-1-indenyl)(2,3,5-trimethyl-1-cyclopentadienyl)$ZrCl_2$,
Dimethylsilandiyl(2-methyl-4,6-diisopropyl-1-indenyl)(2,3,5-trimethyl-1-cyclopentadienyl)$ZrCl_2$,
Dimethylsilandiyl(2,4,6-trimethyl-1-indenyl)(2,3,5-trimethyl-1-cyclopentadienyl)$ZrCl_2$,
Dimethylsilandiyl(2,5,6-trimethyl-1-indenyl)(2,3,5-trimethyl-1-cyclopentadienyl)$ZrCl_2$,
Dimethylsilandiyl(2,4,5-trimethyl-1-indenyl)(2,3,5-trimethyl-1-cyclopentadienyl)$ZrCl_2$,
Dimethylsilandiyl(2,5,6-dimethyl-1-indenyl)(2,3,5-trimethyl-1-cyclopentadienyl)$ZrCl_2$ und
Dimethylsilandiyl(2,6-dimethyl-1-indenyl)(2,3,5-trimethyl-1-cyclopentadienyl)$ZrCl_2$.

Beispiele für die Verbindungen der Formel (I), die sich besonders zur Herstellung niedermolekularer, niederisotaktischer Polymere eignen, sind:

Dimethylsilandiyl(2-methyl-4,5-benzo-1-indenyl)(3-methyl-1-cyclopentadienyl)$ZrCl_2$,
Dimethylmethylen(2-methyl-1-indenyl) (cyclopentadienyl)$ZrCl_2$,

Dimethylmethylen(4,5-benzo-1-indenyl)(cyclopentadienyl)$ZrCl_2$,
Dimethylgermyl(4,5-benzo-1-indenyl)(cyclopentadienyl)$ZrCl_2$,
Dimethylsilandiyl(2-methyl-4,5-benzo-1-indenyl)(cyclopentadienyl)$ZrCl_2$,
Dimethylsilandiyl(2-methyl-4-phenyl-1-indenyl)(3-methyl-1-cyclopentadienyl)$ZrCl_2$,
Dimethylgermyl(2-methyl-4-phenyl-1-indenyl)(cyclopentadienyl)$ZrCl_2$,
Dimethylsilandiyl(4-phenyl-1-indenyl)(3-methyl-1-cyclopentadienyl)$ZrCl_2$,
Dimethylsilandiyl(4-phenyl-1-indenyl)(cyclopentadienyl)$ZrCl_2$,
Dimethylmethylen(4-phenyl-1-indenyl)(cyclopentadienyl)$ZrCl_2$ und
Dimethylsilandiyl(4,5-benzo-1-indenyl)(cyclopentadienyl)$ZrCl_2$.

Die Metallocene der Formel (I) können prinzipiell nach folgendem Reaktionsschema hergestellt werden:

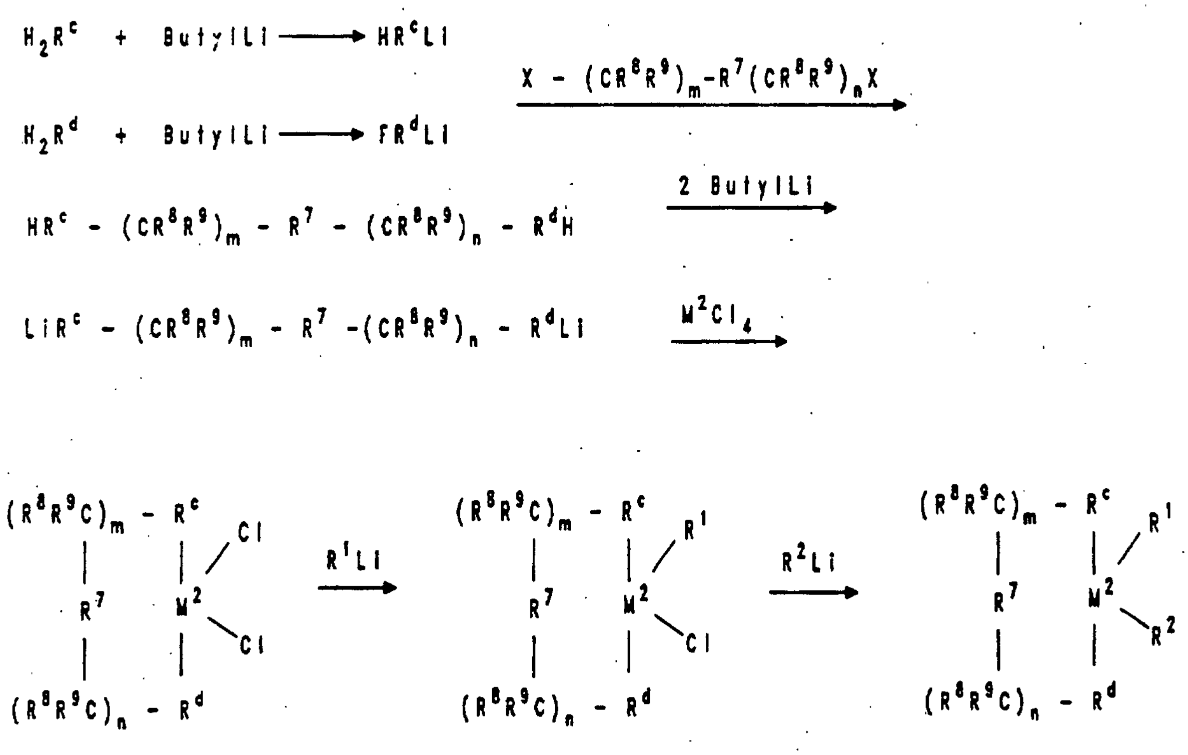


X = Cl, Br, I, O-Tosyl;

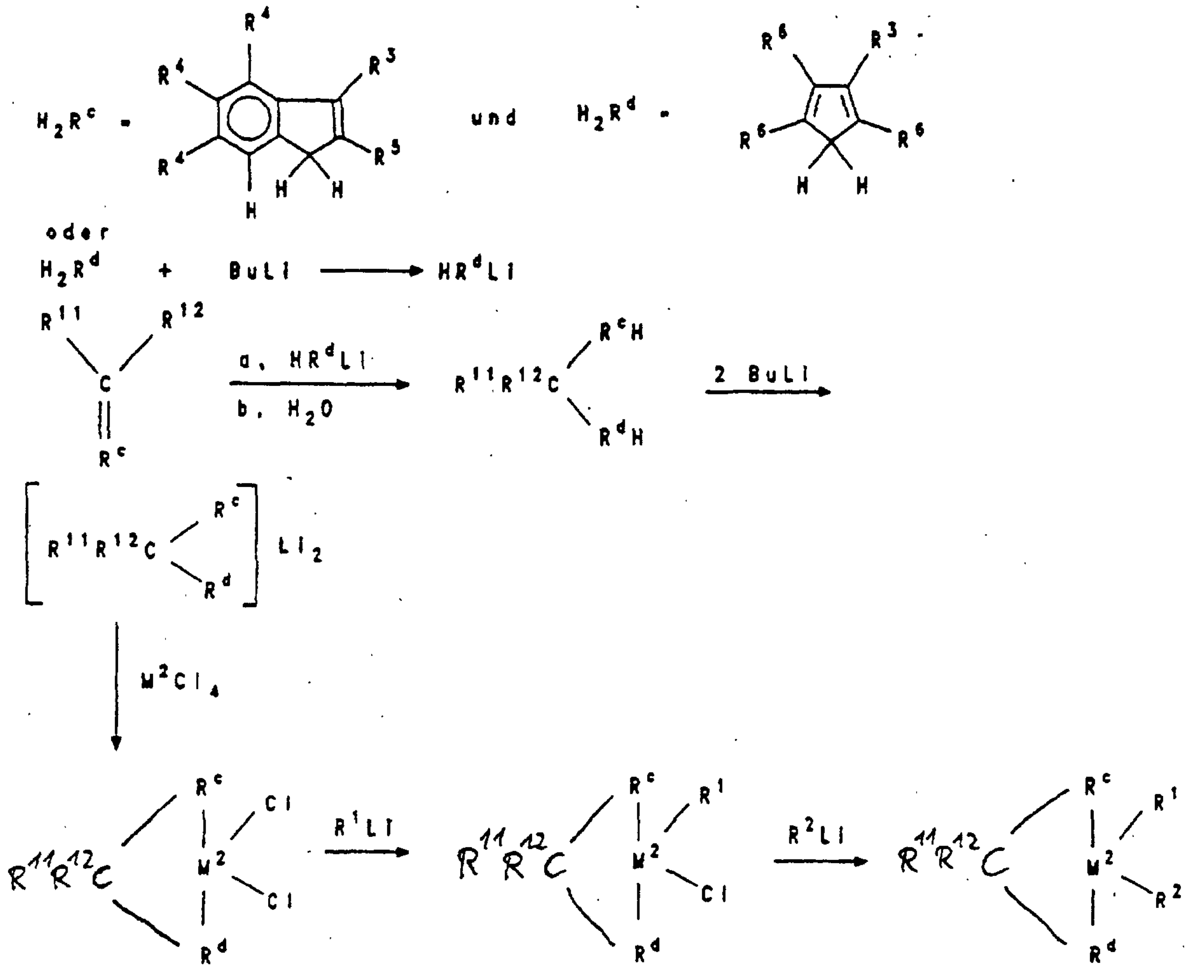


(vgl. Journal of Organomet. Chem. (1985) 63-67 und EP-A 320 762).

Die vorliegende Erfindung betrifft auch ein Verfahren zur Herstellung eines Olefinpolymers durch Polymerisation mindestens eines Olefins in Gegenwart eines Katalysators, welcher mindestens ein Metallocen als Übergangsmetallverbindung und mindestens einen Cokatalysator enthält, dadurch gekennzeichnet, daß das Metallocen eine Verbindung der Formel I ist.

Die Polymerisation kann eine Homopolymerisation oder eine Copolymerisation sein. Bevorzugt werden Olefine der Formel $R^a$-CH =CH-$R^b$ homo- oder copolymerisiert, worin $R^a$ und $R^b$ gleich oder verschieden sind und ein Wasserstoffatom oder einen Kohlenwasserstoffrest mit 1 bis 20 C-Atomen, insbesondere 1 bis 10 C-Atome, bedeuten, oder $R^a$ und $R^b$ zusammen mit den sie verbindenden Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen.

Bevorzugt wird in dem erfindungsgemäßen Verfahren Ethylen oder Propylen homopolymerisiert, oder Ethylen mit einem oder mehreren 1-Olefinen mit 3-20 C-Atomen, wie Propylen, und/oder einem oder mehreren Dienen mit 4-20 C-Atomen, wie 1,3-Butadien, copolymerisiert. Beispiele von Copolymeren sind Ethylen/Propylen-Copolymere, Ethylen/Propylen/1,4-Hexadien-Copolymere, Ethylen/Propylen/5-Ethyliden-2-Norbornen-Copolymere oder Ethylen-Norbornen-Copolymere.

Das erfindungsgemäße Verfahren eignet sich insbesondere zur Herstellung isotaktischer Olefinpolymere.

Die Polymerisation erfolgt bevorzugt bei einer Temperatur von 0 bis 200°C, besonders bevorzugt 50 bis 100°C. Der Druck beträgt bevorzugt 0,5 bis 100 bar, insbesondere 5 bis 64 bar.

Die Polymerisation kann in Lösung, in Suspension oder in der Gasphase, kontinuierlich oder diskontinuierlich, ein- oder mehrstufig durchgeführt werden.

Bevorzugt enthält der in dem erfindungsgemäßen Verfahren eingesetzte Katalysator ein Metallocen und einen Cokatalysator. Es können auch Mischungen von zwei oder mehr erfindungsgemäßen Metallocenen eingesetzt werden, insbesondere zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator werden bevorzugt Aluminium- und/oder Borverbindungen verwendet.

Als Aluminiumverbindung wird in dem erfindungsgemäßen Verfahren bevorzugt ein Aluminoxan eingesetzt, welches vorzugsweise die Formel II

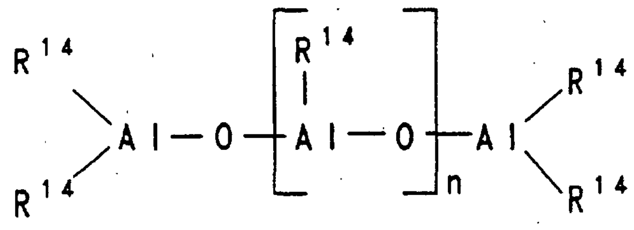

(II)

für den linearen Typ und/oder die Formel III

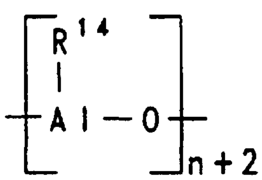

(III)

für den cyclischen Typ aufweist, wobei in den Formeln II und III die Reste $R^{14}$ gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_6$-$C_{18}$-Fluorarylgruppe oder Wasserstoff bedeuten und n eine ganze Zahl von 0 bis 50 ist, oder-anstelle des Aluminoxans eine Mischung eines Aluminoxans mit einer Verbindung $AlR_3^{15}$, worin $R^{15}$ die gleiche Bedeutung wie $R^{14}$ hat.

Bevorzugt sind die Reste $R^{14}$ gleich und bedeuten Methyl, Isobutyl, Phenyl oder Benzyl, besonders bevorzugt Methyl.

Sind die Reste $R^{14}$ unterschiedlich, so sind sie bevorzugt Methyl und Wasserstoff oder alternativ Methyl und Isobutyl, wobei Wasserstoff bzw. Isobutyl bevorzugt mit einem Anteil von 0,01 - 40 % (Reste $R^{14}$) enthalten sind. Statt des Aluminoxans kann bei der Polymerisation als Cokatalysator eine Mischung bestehend aus Aluminoxan und $AlR_3^{15}$ verwendet werden, wobei $R^{15}$ die Bedeutung von $R^{14}$ hat. Bevorzugt sind die Reste $R^{15}$ gleich und bedeuten Methyl, Ethyl, Isobutyl, Phenyl oder Benzyl.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen $R^{14}$ werden entsprechend der gewünschten Zusammensetzung zwei verschiedene Aluminiumtrialkyle ($AlR^{14}_3$ + $AlR^{14}_3$) mit Wasser umgesetzt (vgl. S. Pasynkiewicz, Polyhedron 9 (1990) 429 und EP-A 302 424).

Die genaue räumliche Struktur der Aluminoxane ist nicht bekannt (A.R. Barron et al., J. Am. Chem. Soc. 115 (1993) 4971). Beispielsweise ist denkbar, daß sich Ketten oder Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion mit einem Cokatalysator, insbesondere Aluminoxan vorzuaktivieren. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein $C_6$-$C_{10}$-Kohlenwasserstoff verwendet.

Die Konzentration des Aluminoxans in der Lösung liegt bevorzugt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von $10^{-4}$ - 1 mol pro mol Aluminoxan eingesetzt. Die Voraktivierungszeit beträgt 1 Minute bis 60 Stunden, vorzugsweise 2 bis 60 Minuten. Man arbeitet bei einer Temperatur von -78°C bis 100°C, vorzugsweise 0 bis 70°C.

Das Metallocen kann (gegebenenfalls zusammen mit einem Cokatalysator) auf einen Träger aufgebracht und/oder vorpolymerisiert werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan, Kombinationen von Aluminoxan auf einem Träger wie beispielsweise Silikagel, oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Borverbindung der Formel $R_xNH_{4-x}BR'_4$ oder der Formel $R_3PHBR'_4$ als Cokatalysator verwendet. Dabei sind x= 1,2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandenen Katalysatorgiften ist eine Reinigung mit einem Aluminiumalkyl, beispielsweise $AlMe_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Zugabe des Wasserstoffs bewirkt eine zusätzliche starke Erhöhung der Polymerisationsaktivität.

Der Gesamtdruck im Polymerisationssystem beträgt 0,5 bis 100 bar. Bevorzugt ist die Polymerisation in dem technisch besonders interessanten Druckbereich von 5 bis 64 bar.

Die Metallocene werden bevorzugt in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Der Cokatalysator, wie Aluminoxan oder eine Mischung Aluminoxan/$AlR^{11}_3$, wird bevorzugt in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Propan, Butan, Pentan, Hexan, Heptan, Decan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäße Katalysatorsystem einen nur geringen zeitabhängigen Abfall der Polymerisationsaktivität zeigt.

Nach dem erfindungsgemäßen Verfahren können insbesondere im technisch interessanten Temperaturbereich von 50 bis 100°C Polyolefine mit hoher Molmasse und hoher Isotaktizität hergestellt werden. Diese besitzen insbesondere Bedeutung für die Herstellung von Formteilen wie Folien, Platten oder Großhohlkörpern (z.B. Rohre).

Nach dem erfindungsgemäßen Verfahren können auch Polyolefine mit geringer Molmasse und niedriger Isotaktizität hergestellt werden, wie sie von Bedeutung für Beschichtungen und Klebeanwendungen sind.

Das erfindungsgemäße Metallocen zeichnet sich durch eine hohe katalysatoraktivität aus, insbesondere bei Temperaturen zwischen 50 und 100°C. Außerdem erübrigt sich die aufwendige Abtrennung der meso-Form. Durch Kombination unterschiedlicher Liganden werden außerdem Metallocene erhalten, die isotaktische Polyolefine mit maßgeschneiderten Eigenschaften liefern.

Insbesondere führen die erfindungsgemäßen Metallocene in geträgerter Form zu Polyolefinen mit sehr guten Pulvermorphologien.

Die nachfolgenden Beispiele sollen die Erfindung näher erläutern.

Es bedeuten:

| | |
|---|---|
| VZ = | Viskositätszahl in $cm^3/g$ |
| $M_w$ = | Molmassengewichtsmittel in g/mol (mit GPC ermittelt) |
| $M_w/M_n$ = | Polydispersität (mit GPC ermittelt) |
| II = | Isotaktischer Index (mm + 1/2 mr) (mit $^{13}C$-NMR ermittelt) |
| $n_{iso}$ = | Isotaktische Blocklänge (mit $^{13}C$-NMR ermittelt) |

| | |
|---|---|
| MFI (230/2.16) | Schmelzindex ermittelt nach DIN 53735 in dg/min |
| MFI (230/5) | Schmelzindex ermittelt nach DIN 53735 in dg/min |
| Schmp. = | Schmelzpunkt ermittelt mit DSC in °C (20°C/min Aufheiz- und Abkühlgeschwindigkeit) |
| rac = | Die von dem Zentralatom und den beiden Liganden gebildete Struktureinheit weist näherungsweise $C_s$-Symmetrie auf (bei der Symmetriebetrachtung wird der anellierte Sechsring des Indenylliganden nicht berücksichtigt). |
| pseudo-rac = | Die von dem Zentralatom und den beiden Liganden gebildete Struktureinheit weist näherungsweise $C_2$-Symmetrie auf (bei der Symmetriebetrachtung wird der anellierte Sechsring des Indenylliganden nicht berücksichtigt). |
| Rac und pseudo-rac | Verbindungen sind am Zentralatom chiral. |

Alle Glasgeräte wurden im Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden mit Ausnahme von Dichlormethan unter Argon von einer Na/K-Legierung abdestilliert. Dichlormethan wurde unter Argon von $CaH_2$ abdestilliert.

Beispiel 1

Dimethylsilandiyl(2-methyl-4-phenyl-1-indenyl)(2,3,5-trimethyl-1-cyclopentadienyl)-zirkondichlorid (1)

Zu einer Lösung von 15 g (73 mmol) 2-Methyl-7-phenyl-inden in 150 ml Toluol und 7,5 ml $Et_2O$ wurden bei Raumtemperatur innerhalb von 30 min 29 ml einer 2,5 M Lösung von Butyllithium in Hexan zugetropft und anschließend 2 h bei 40°C nachgerührt. Die Suspension wurde anschließend bei Raumtemperatur zu einer Lösung von 35,3 ml (290 mmol) Dimethyldichlorsilan in 100 ml Toluol getropft und 3 h bei Raumtemperatur nachgerührt. Das Lösemittel wurde i.V. entfernt und der Rückstand im Vakuum (0,1 Torr) getrocknet und anschließend in 200 ml Toluol aufgenommen. Zu dieser Lösung wurde bei Raumtemperatur eine Suspension von 1,2,4-Trimethylcyclopentadienyllithium (hergestellt durch Umsetzung von 7,9 g (73 mmol) 1,2,4-Trimethylcyclopentadien in 60 ml Toluol und 6 ml THF bei Raumtemperatur mit 29 ml einer 2,5 M Lösung von Butyllithium in Hexan und 1 h Nachrühren bei 40°C) innerhalb von 50 min zugetropft und anschließend noch 2 h bei Raumtemperatur nachgerührt. Die Reaktionsmischung wurde mit 100 ml Wasser versetzt, die Phasen getrennt und die organische Phase mit 50 ml Wasser gewaschen. Die Lösemittel wurden im Vakuum entfernt und der Rückstand durch Chromatographie an 400 g Kieselgel (Hexan/Methylenchlorid 9:1) gereinigt. Es wurden 10,3 g ( 38 %) des Ligandsystems von Verbindung 1 als farbloses Öl erhalten.

Zu einer Lösung von 10,0 g (37 mmol) des Ligandsystems von Verbindung 1 in 50 ml Toluol wurde bei 50°C innerhalb von 20 min 27 ml (74 mmol) einer 20%igen Lösung von Butyllithium in Toluol zugetropft und anschließend noch 2 h bei 100°C nachgerührt. Nach beendeter Gasentwicklung wurde auf -40°C gekühlt und mit 8,6 g (37 mmol) $ZrCl_4$ versetzt und 1 h bei Raumtemperatur nachgerührt. Es wurde erneut auf -40°C gekühlt, mit 5 ml THF versetzt und über eine G3-Schlenk-Fritte filtriert. Das Filtrat wurde auf die Hälfte eingeengt und bei -30°C kristallisieren lassen. Der ausgefallene Feststoff wurde abfiltriert und dreimal mit je 20 ml Hexan nachgewaschen und anschließend getrocknet.

Es wurden 9 g (46 %) von Verbindung (1) als gelber Feststoff erhalten.

$^1H$-NMR (100 MHz, $CDCl_3$): 6,9 - 7,8 (m, 8H, arom. H und β-H-Ind), 6,4 (s, 1H, H-Cp), 1,9 - 2,1 (4s, 16H, $CH_3$), 1,0 u. 1,1 (2s, 6H, $CH_3Si$).
Massenspektrum: 530 $M^+$, korrektes Zefallsmuster.

Beispiel 2

Dimethylsilandiyl(2-methyl-4,5-benzoindenyl)(cyclopentadienyl)zirkondichlorid (2)

Zu einer Lösung von 50,1 g (278 mmol) 2-Methyl-4,5-benzoinden (die Herstellung ist in EP 549 900 beschrieben) in 500 ml Toluol und 25 ml $Et_2O$ wurden bei Raumtemperatur innerhalb von 30 min 111 ml einer 2,5 M Lösung von Butyllithium in Hexan zugetropft und anschließend 2 h bei 40°C nachgerührt. Die Suspension wurde anschließend bei Raum- temperatur zu einer Lösung von 135 ml (1112 mmol) Dimethyldichlorsilan in 200 ml Toluol getropft und 3 h bei Raumtemperatur nachgerührt. Das Lösemittel wurde i.V. entfernt, der Rückstand im Vakuum (0,1 Torr) getrocknet und anschließend in 200 ml Toluol aufgenommen. Die Suspension wird vom Lithiumchlorid abfiltriert und das Lösungsmittel des Filtrats im Vakuum entfernt. Man erhält 43 g (57 %) eines roten öligen Produktes.

17,6 g (64,7 mmol) Dimethyl(2-methyl-4,5-benzoindenyl)chlorsilan wurden in 100 ml THF vorgelegt und bei Raumtemperatur eine Suspension von Cyclopentadienyllithium (hergestellt durch Umsetzung von 6,4 g (97,6 mmol) Cyclopentadien in 50 ml THF mit 39,0 ml (97,6 mmol) einer 2,5 M Lösung von Butyllithium in Hexan und 1 h Nachrühren

bei 40°C) innerhalb von 15 min zugetropft und anschließend noch 2 h bei Raumtemperatur nachgerührt. Die Reaktionsmischung wurde mit 250 ml Wasser versetzt, die Phasen getrennt und die organische Phase mit 50 ml Wasser gewaschen. Die Lösemittel wurden im Vakuum entfernt und der Rückstand durch Chromatographie an 400 g Kieselgel (Hexan/ Methylenchlorid 10:1) gereinigt. Es wurden 10,37 g (53%) des Ligandsystems von Verbindung 2 als farbloses Öl erhalten.

Zu einer Lösung von 2,64 g (8,7 mmol) des Ligandsystems von Verbindung 2 in 50 ml Toluol / 5 ml $Et_2O$ wurden bei Raumtemperatur innerhalb von 20 min 7,3 ml (18,3 mmol) einer Lösung von Butyllithium in Hexan (2,5 M) zugetropft und anschließend noch 2 h bei Raumtemperatur nachgerührt. Nach beendeter Gasentwicklung wurde auf -40°C gekühlt, mit 1,98 g (8,5 mmol) $ZrCl_4$ versetzt und 1 h bei Raumtemperatur nachgerührt. Die Suspension wurde über eine G3-Fritte filtriert, 2x mit 20 ml $CH_2Cl_2$ nachgewaschen und vom Filtrat das Lösungsmittel im Vakuum entfernt. Nach Umkristallisation aus $CH_2Cl_2$ erhält man 2,39 g (61%) des Metallocens (2).

$^1$H-NMR (300 MHz, $CDCl_3$): δ = 8,06 (m, 6 H, arom. H); 7,18 (m, 1 H, Benzoindenyl-H); 6,68 (m, 2H, Cp-H); 5,96 (m, 1H, Cp-H); 5,80 (m, 1 H, Cp-H); 2,28 (s, 3 H, $CH_3$-Benzo.-H); 1,03/0,91 (je s, je 3 H, $(CH_3)_2Si$).

Beispiel 3

Isopropyliden(4,5-benzoindenyl)(cyclopentadienyl)zirkondichlorid (3)

Zu einer Lösung von 6,2 g (37,3 mmol) 4,5-Benzoinden (die Herstellung ist in DE 4139595 beschrieben) in 55 ml THF wurden bei 0°C innerhalb von 30 min 13,8 ml (34,5 mmol) einer 2,5 M Lösung von Butyllithium in Hexan zugetropft und anschließend 2 h bei 40°C nachgerührt. Die Suspension wurde anschließend bei -30°C zu einer Lösung von 3,6 g (34,3 mmol) 6,6-Dimethylfulven in 16 ml THF gegeben. Man läßt langsam im Kältebad auf Raumtemperatur erwärmen und rührt noch 3 h bei Raumtemperatur nach. Die Suspension wurde mit 100 ml Wasser versetzt, die Phasen getrennt und die organische Phase mit 50 ml Wasser gewaschen. Die Lösungsmittel wurden im Vakuum entfernt und der Rückstand durch Chromatographie an 350 g Kieselgel (iso-Hexan/Diisopropylether 1%) gereinigt. Es wurden 5,1 g (55%) des Ligandsystems von Verbindung 3 als gelbes Öl erhalten.

Zu einer Lösung von 5,1 g (18,7 mmol) des Ligandsystems von Verbindung 3 in 100 ml $Et_2O$ wurden bei Raumtemperatur 15,7 ml (39,3 mmol) einer Lösung von Butyllithium in Hexan (2,5 M) zugetropft und anschließend noch 2 h bei Raumtemperatur nachgerührt. Die Suspension wird filtriert und man erhält nach Trocknung im Vakuum 6,4 g (17,9 mmol) der Dilithium-Verbindung, an der ein Molekül Ether koordiniert ist. Diese Dilithium-Verbindung wird bei -78°C zu einer Suspension von 4,0 g (17,1 mmol) $ZrCl_4$ in 100 ml Toluol gegeben. Man läßt langsam im Kältebad auf Raumtemperatur erwärmen und rührt noch 1 h bei Raumtemperatur nach. Die Suspension wurde über eine G4-Fritte filtriert und 2 x mit 40 ml Toluol nachgewaschen. Der Rückstand wurde mit 500 ml $CH_2Cl_2$ extrahiert und das Filtrat im Vakuum auf 50 ml reduziert. Nach Isolierung des gebildeten gelben Feststoffes durch Filtration und anschließender Trocknung im Vakuum erhält man 5,8 g (79%) des Metallocens (3) als gelbes Pulver.

$^1$H-NMR (100 MHz, $CDCl_3$): δ = 8,18 - 7,41 (m, 6 H, arom. H); 7,22 (m, 1 H, Benzoindenyl-H); 6,50 (m, 2H, Cp-H); 6,13 (d, 1 H, Benzoindenyl-H); 5,88 (m, 1H, Cp-H); 5,77 (m, 1 H, Cp-H); 2,25/1,98 (je s, je 3 H, $(CH_3)_2C$).

Beispiel 4

Dimethylsilandiyl(4,5-benzoindenyl)(cyclopentadienyl)zirkondichlorid (4)

Zu einer Lösung von 11,1 g (66,8 mmol) 4,5-Benzoinden in 120 ml Toluol und 6 ml $Et_2O$ wurden bei 0°C innerhalb von 30 min 26,7 ml (66,8 mmol) einer 2,5 M Lösung von Butyllithium in Hexan zugetropft und anschließend 2 h bei 40°C nachgerührt. Die Suspension wurde anschließend bei Raumtemperatur zu einer Lösung von 32,4 ml (267 mmol) Dimethyldichlorsilan in 200 ml Toluol getropft und 3 h bei Raumtemperatur nachgerührt. Die Suspension wird vom Lithiumchlorid abfiltriert und das Lösungsmittel des Filtrats im Vakuum entfernt. Man erhält 16,8 g (97 %) eines gelben öligen Produktes.

16,8 g (64,7 mmol) Dimethyl(4,5-benzoindenyl)chlorsilan wurden in 80 ml THF vorgelegt, bei Raumtemperatur mit einer Lösung von 8,5 g (96,5 mmol) Cyclopentadienylnatrium in 80 ml THF versetzt und anschließend noch 2 h bei Raumtemperatur nachgerührt. Die Reaktionsmischung wurde mit 300 ml Wasser versetzt, die Phasen getrennt und die organische Phase mit 50 ml Wasser gewaschen. Die Lösemittel wurden im Vakuum entfernt und der Rückstand durch Chromatographie an 400 g Kieselgel (iso-Hexan/Diisopropylether 2%) gereinigt. Es wurden 14,3 g (77%) des Ligandsystems von Verbindung 4 als hellgelbes Öl erhalten.

Zu einer Lösung von 8,0 g (27,7 mmol) des Ligandsystems von Verbindung 4 in 200 ml $Et_2O$ wurden bei Raumtemperatur 22,9 ml (58,2 mmol) einer Lösung von Butyllithium in Hexan (2,5 M) zugetropft und anschließend noch 2 h bei Raumtemperatur nachgerührt. Die Suspension wurde filtriert und man erhält nach Trocknung im Vakuum 9,0 g (24 mmol) der Dilithium-Verbindung, an der ein Molekül Ether koordiniert ist. Diese Dilithium-Verbindung wird

bei -78°C zu einer Suspension von 5,3 g (22,8 mmol) $ZrCl_4$ in 140 ml Toluol gegeben. Man läßt langsam im Kältebad auf Raumtemperatur erwärmen und rührt noch 1 h bei Raumtemperatur nach. Die Suspension wurde über eine G4-Fritte filtriert und 2x mit 25 ml Toluol nachgewaschen. Der Rückstand wurde mit 500 ml $CH_2Cl_2$ extrahiert und das Filtrat im Vakuum auf 50 ml reduziert. Nach Isolierung des gebildeten gelben Feststoffes durch Filtration und anschließender Trocknung im Vakuum erhält man 6,3 g (62%) des Metallocens (4).

$^1$H-NMR (100 MHz, $CDCl_3$): $\delta$ = 8,10 - 7,25 (m, 6 H, arom. H); 7,41 (m, 1 H, Benzoindenyl- H); 6,75 (m, 2H, Cp-H); 6,20 (d, 1 H, Benzoindenyl-H); 5,94 (m, 2H, Cp-H); 1,04/0,88 (je s, je 3 H, $(CH_3)_2Si$).

Beispiel 5

Isopropyliden(2methylindenyl)(cyclopentadienyl)zirkondichlorid (5)

Zu einer Lösung von 2,0 g (15,4 mmol) 2-Methylinden in 20 ml THF wurden bei 0°C innerhalb von 5 min 6,2 ml (15,4 mmol) einer 2,5 M Lösung von Butyllithium in Hexan zugetropft und anschließend 2 h bei 40°C nachgerührt. Die Suspension wurde anschließend bei -30°C zu einer Lösung von 1,6 g (15,4 mmol) 6,6-Dimethylfulven in 10 ml THF gegeben. Man läßt langsam im Kältebad auf Raumtemperatur erwärmen und rührt noch 3 h bei Raumtemperatur nach. Die Suspension wurde mit 100 ml Wasser versetzt, die Phasen getrennt und die organische Phase mit 50 ml Wasser gewaschen. Die Lösungsmittel wurden im Vakuum entfernt und der Rückstand durch Chromatographie an Kieselgel (iso-Hexan/Diisopropylether 1 %) gereinigt. Es wurden 3,2 g (88%) des Ligandsystems von Verbindung 5 als gelbes Öl erhalten.

Zu einer Lösung von 3,2 g (13,5 mmol) des Ligandsystems von Verbindung 5 in 90 ml $Et_2O$ wurden bei Raumtemperatur 11,4 ml (28,4 mmol) einer Lösung von Butyllithium in Hexan (2,5 M) zugetropft und anschließend noch 2 h bei Raumtemperatur nachgerührt. Die Suspension wird filtriert und man erhält nach Trocknung im Vakuum 4,0 g (12,4 mmol) der Dilithium-Verbindung, an der ein Molekül Ether koordiniert ist. Diese Dilithium-Verbindung wird bei -78°C zu einer Suspension von 2,7 g (11,8 mmol) $ZrCl_4$ in 65 ml Toluol gegeben. Man läßt langsam im Kältebad auf Raumtemperatur erwärmen und rührt noch 1 h bei Raumtemperatur nach. Die gelbfarbene Suspension wurde über eine G4-Fritte filtriert und 2 x mit 10 ml Toluol nachgewaschen. Der Rückstand wurde mit 120 ml $CH_2Cl_2$ extrahiert und das Filtrat im Vakuum auf 15 ml reduziert. Nach Isolierung des gebildeten gelben Feststoffes durch Filtration und anschließender Trocknung im Vakuum erhält man 4,02 g (86%) des Metallocens (5) als gelbes Pulver.

$^1$H-NMR (100 MHz, $CDCl_3$): $\delta$ = 7,80 - 6,85 (m, 4 H, arom. H); 6,62 (s, 1 H, Indenyl-H); 6,50 (m, 2H, Cp-H); 5,80 (m, 2H, Cp-H); 2,37/2,23/2,12 (je s, je 3 H, $(CH_3)_2C$ bzw. $CH_3$-Ind.).

Beispiel 6

Dimethylsilandiyl(2-methyl-4,5-benzoindenyl)(2-methylcyclopentadien)zirkondichlorid (6)

Zu einer Lösung von 50,1 g (278 mmol) 2-Methyl-4,5-benzoinden (die Herstellung ist in EP 549 900 beschrieben) in 500 ml Toluol und 25 ml $Et_2O$ wurden bei Raumtemperatur innerhalb von 30 min 111 ml einer 2,5 M Lösung von Butyllithium in Hexan zugetropft und anschließend 2 h bei 40°C nachgerührt. Die Suspension wurde anschließend bei Raum- temperatur zu einer Lösung von 135 ml (1112 mmol) Dimethyldichlorsilan in 200 ml Toluol getropft und 3 h bei Raumtemperatur nachgerührt. Das Lösemittel wurde i.V. entfernt, der Rückstand im Vakuum (0,1 Torr) getrocknet und anschließend in 200 ml Toluol aufgenommen. Die Suspension wird vom Lithiumchlorid abfiltriert und das Lösungsmittel des Filtrats im Vakuum entfernt. Man erhält 43 g ( 57%) eines roten öligen Produktes.

15,0 g (55 mmol) Dimethyl(2-methyl-4,5-benzoindenyl)chlorsilan wurden in 70 ml THF vorgelegt und bei Raumtemperatur eine Suspension von Methylcyclopentadienyllithium (hergestellt durch Umsetzung von 4,85 g (60,5 mmol) Methylcyclopentadien in 60 ml THF mit 24,2 ml (60,5 mmol) einer 2,5 M Lösung von Butyllithium in Hexan und 1 h Nachrühren bei 40°C) innerhalb von 15 min zugetropft und anschließend noch 4 h bei Raumtemperatur nachgerührt. Die Reaktionsmischung wurde mit 250 ml Wasser versetzt, die Phasen getrennt und die organische Phase mit 50 ml Wasser gewaschen. Die Lösemittel wurden im Vakuum entfernt und der Rückstand durch Chromatographie an 400 g Kieselgel (Hexan/ 2% Essigester) gereinigt. Es wurden 9,92 g (57%) des Ligandsystems von Verbindung 6 als farbloses Öl erhalten.

Zu einer Lösung von 5,0 g (15,8 mmol) des Ligandsystems von Verbindung 6 in 90 ml Diethylether wurden bei Raumtemperatur innerhalb von 20 min 13,2 ml (33,2 mmol) einer 2,5 M Lösung von Butyllithium in Hexan zugetropft und anschließend noch 2 h bei Raumtemperatur nachgerührt. Das Lösungsmittel wurde im Vakuum entfernt und der ölige Rückstand mit Pentan verrührt. Der gebildete Feststoff wird abfiltriert und im Vakuum getrocknet. Man erhält 4,89 g Lithiumsalz, an dem noch 1 Äquivalent Ether koordiniert ist. 3,49 g (15 mmol) $ZrCl_4$ werden in 100 ml Methylenchlorid bei -78°C vorgelegt und mit dem Lithium-Salz versetzt. Man läßt innerhalb von 12 Stunden auf Raumtemperatur erwärmen und rührt noch 1 h bei Raumtemperatur nach. Die Suspension wurde über eine G3-Fritte filtriert, zweimal mit

20 ml Methylenchlorid nachgewaschen und der Frittenrückstand im Vakuum getrocknet. Man erhält 2,22 g (31%) der rac-Verbindung (6).

$^{1}H$-NMR (100 MHz, $CDCl_3$): $\delta$ = 8,27 - 7,04 (m, 8 H, arom. H und Benzoindenyl-H), 6,80 - 5,40 (m, 3 H, Cp-H), 2,32/ 2,04 (je s, je 3 H, $CH_3$-Cp und $CH_3$-Benzo.); 1,04/0,94 (je s, je 3H, $(CH_3)_2Si$).

Das Filtrat wurde auf 1/5 seines Volumens eingeengt und bei -30°C zur Kristallisation gelagert. Man erhielt 1,81 g des "pseudo-rac" Komplexes (6) als gelben Feststoff.
$^{1}H$-NMR (100 MHz, $CDCl_3$): $\delta$ = 8,10 - 7,14 (m, 8 H, arom. H und Benzoindenyl-H), 6,53 - 5,51 (m, 3 H, Cp-H), 2,29/ 2,25 (je s, je 3 H, $CH_3$-Cp und $CH_3$-Benzo.); 1,10/0,89 (je s, je 3H, $(CH_3)_2Si$).

Polymerisationsbeispiele

Beispiel A

Ein trockener 24 $dm^3$-Reaktor wurde mit Propylen gespült und mit 12 $dm^3$ flüssigem Propylen und 25 $cm^3$ toluolischer Methylaluminoxanlösung (entsprechend 37 mmol Al, mittlerer Oligomerisierungsgrad war n = 20) befüllt. Der Inhalt wurde bei 30°C 5 Minuten mit 250 Upm gerührt. Parallel dazu wurden 2,0 mg Dimethylsilandiyl-(2-methyl-4-phenyl-1-indenyl)(2,3,5-trimethyl-1-cyclopentadienyl)zirkondichlorid (1) in 10 $cm^3$ toluolischer Methylaluminoxanlösung (17 mmol Al) gelöst und durch 5 minütiges Stehenlassen voraktiviert. Die Lösung wurde in den Reaktor gegeben und es wurde 1 h bei 70°C polymerisiert. Es wurden 1,27 kg Polypropylen erhalten. Die Metallocenaktivität war 635 kg PP/g Metallocen x h. Am Polymeren wurden folgende Eigenschaften ermittelt:
VZ = 275 $cm^3$/g; $M_w$ = 385 500 g/mol; $M_w/M_n$ = 2,0;
MFI (230/2) = 3,9 dg/min; Schmp. 157°C; II = 98,0 %; $n_{iso}$ = 98,

Beispiel B

Beispiel A wurde bei 50°C Polymerisationstemperatur wiederholt. Die Metallocenaktivität war 265 kg PP/g Metallocen x h.
VZ = 485 $cm^3$/g; $M_w$ = 564 000 g/mol; $M_w/M_n$ = 2,1;
MFI (230/5) = 0,9 dg/min; Schmp. 162°C; II = 98,9 %; $n_{iso}$ = 150.

Beispiel C (Vergleichsbeispiel)

Beispiel A wurde mit dem Metallocen rac-Dimethylsilandiylbis(2,3,5-trimethyl-1-cyclopentadienyl)zirkondichlorid wiederholt. Es wurde eine Aktivität von 85 kg PP/g Metallocen x h erzielt und das Polymer wies folgende Eigenschaften auf:
VZ = 53 $cm^3$/g; $M_w$ = 46 100 g/mol; $M_w/M_n$ = 2,8;
MFI nicht meßbar, da zu dünnflüssig; Schmp. 152°C; II = 97,0 %.

Beispiele D bis H

Ein trockener 1,5 $dm^3$-Reaktor wurde mit Stickstoff gespült und bei 20°C mit 0,75 $dm^3$ eines entaromatisierten Benzinschnitts mit dem Siedebereich 100 bis 120°C gefüllt. Dann wurde der Gasraum des Reaktors durch 5-maliges Aufdrücke von 2 bar Ethylen und Entspannen stickstofffrei gespült. Danach wurden 3,75 $cm^3$ toluolische Methylalumiumoxanlösung (5 mmol Al, n = 18) zugegeben. Unter Rühren wurde der Reaktor auf 30°C (innerhalb 15 Minuten) aufgeheizt und bei 500 Upm Rührgeschwindigkeit wurde durch Zugabe von Ethylen ein Gesamtdruck von 5 bar eingestellt. Parallel dazu wurden 0,125 mg Metallocen (Typ der Verbindung siehe Tabelle 1) in 1,25 $cm^3$ toluolischer Methylaluminiumoxanlösung (1,67 mmol Al, n = 18) aufgelöst und durch 15 minütiges Stehenlassen zur vollständigen Reaktion gebracht. Dann wurde die Lösung in den Reaktor gegeben, das Polymerisationssystem wurde auf 70°C gebracht und durch entsprechende Kühlung 1 Stunde bei dieser Temperatur belassen. Durch entsprechende Zugabe von Ethylen wurde der Druck während dieser Zeit bei 5 bar gehalten. Durch Zugabe von 2 ml Isopropanol wurde dann die Polymerisation gestoppt, das Polymer abfiltriert und im Vakuum getrocknet. Die Ergebnisse der Polymerisationen sind der Tabelle 1 zu entnehmen.

Tabelle 1 Ethylenpolymerisationen (Beispiele D bis H)

| Beispiel | Metallocen | Aktivität [kg PE/g Met. x h] | VZ [$cm^3/g$] |
|---|---|---|---|
| D | $Me_2Si$(4,5-benzo-1-indenyl)(methylcyclopentadienyl)$ZrCl_2$ | 98 | 149 |
| E | $Me_2Si$(4,5-benzo-1-indenyl)(cyclopentadienyl)$ZrCl_2$ | 120 | 162 |
| F | $Me_2C$(4,5-benzo-1-indenyl)(cyclopentadienyl)$ZrCl_2$ | 14 | 59 |
| G | $Me_2Si$(2-me-4,5-benzo-1-indenyl)(cyclopentadienyl)$ZrCl_2$ | 66 | 340 |
| H | $Me_2C$(2-me-1-indenyl)(cyclopentadienyl)$ZrCl_2$ | 20 | 75 |

Beispiele I bis M

Beispiel A wurde bei 60°C Polymerisationstemperatur wiederholt, es wurden jedoch die in Tabelle 2 aufgeführten Metallocene verwendet. Die Ergebnisse der Polymerisationen sind ebenfalls der Tabelle 2 zu entnehmen.

Tabelle 2 Propylenpolymerisationen (Beispiele I bis M)

| Beispiel | Metallocen | Aktivität [kg PE/g Met. x h] | VZ [$cm^3/g$] |
|---|---|---|---|
| I | $Me_2Si$(4,5-benzo-1-indenyl)(methylcyclopentadienyl)$ZrCl_2$ | 97 | 62 |
| J | $Me_2Si$(4,5-benzo-1-indenyl)(cyclopentadienyl)$ZrCl_2$ | 57 | 20 |
| K | $Me_2C$(4,5-benzo-1-indenyl)(cyclopentadienyl)$ZrCl_2$ | 17 | 8 |
| L | $Me_2Si$(2-me-4,5-benzo-1-indenyl)(cyclopentadienyl)$ZrCl_2$ | 360 | 34 |
| M | $Me_2C$(2-me-1-indenyl)(cyclopentadienyl)$ZrCl_2$ | 36 | 10 |

Beispiel N

Beispiel A wurde wiederholt, vor Zugabe des Propylens wurden jedoch zusätzlich 3 $Ndm^3$ Wasserstoff in den Reaktor gegeben.
Die Metallocenaktivität war 964 kg PP/g Metallocen x h. Am Polymeren wurden folgenden Eigenschaften ermittel: VZ

= 128 $cm^3/g$; $M_w$ = 171500 g/Mol, $M_w/M_n$ = 1,9; MFI (230/2) = 83 dg/min; Schmp. 158°C.

Beispiel O

Beispiel A wurde wiederholt, die Polymeristionstemperatur war jedoch 50°C und während der Polymerisationszeit wurden 50 g Ethylen in den Reaktor dosiert (0,8 g Ethylen/min Dosierrate).
Es wurden 1,17 kg statitisches Copolymer erhalten.
Die Metallocenaktivität war 585 kg Copolymer/gMetallocen x h.
VZ = 298 $cm^3/g$, MFI (230/2) = 2,8 dg/min, Schmp. 132°C
Ethylengehalt: 3,8 Gew.-%.

Beispiel P

Beispiel O wurde mit 1-Hexen als Comonomer wiederholt. Die Metallocenaktivität war 476 kg Copolymer/g Metallocen x h. Der Hexengehalt im so hergestellten statistischen Copolymeren war 4,8 Gew.-%.

Beispiel Q

Beispiel O wurde mit 4-Methyl-1-penten als Comonomer wiederholt. Die Mettallocenaktivität war 378 kg Copolymer/g Metallocen x h, der Methylpentengehalt war 5,3 Gew.-%.

Beispiel R

Beispiel O wurde wiederholt, es wurden jedoch zur Herstellung eines Terpolymerkautschuks 250 g Ethylen und 150 ml 5-Ethyliden-2-norbornen in den Reaktor dosiert. Die Polymerisationstemperatur war 50°C.
Die Metallocenaktivität war 282 kg Polymer/g Metallocen x h.
Am Polymeren wurden folgende Eigenschaften ermittelt: 39,8 Gew.-% Ethylengehalt und 5,4 Gew.-% Ethylidennorbornengehalt, Glastemperatur Tg = -55,4°C.

Beispiel S

Beispiel R wurde ohne Zugabe von Ethylidennorbornen durchgeführt, die Polymerisationstemeratur war 60°C und die eingesetzte Ethylenmenge 500 g. Die Metallocenaktivität war 598 kg Ethylen-Propylen-Kautschuk/g Metallocen x h.
Am Polymeren wurden folgende Eigenschaften ermittelt: 52,2 Gew.-% Ethylengehalt, Glastemperatur Tg = -53,9°C.

Beispiel T

Ein trockener 150 $dm^3$ Reaktor wurde mit Stickstoff gespült und bei 20°C mit 100 $dm^3$ eines entaromatisierten Benzinschnittes mit dem Siedebereich 100 bis 120°C gefüllt. Dann wurde der Gasraum durch 5-maliges Aufdrücke von 2 bar Propylen und Entspannen stickstofffrei gespült. Nach Zugabe von 50 l flüssigem Propylen wurden 64 $cm^3$ toluolische Methylaluminoxanlösung (entsprechend 100 mmol Al) zugegeben und der Reaktorinhalt auf 50°C aufgeheizt. Durch Zudosierung von Wasserstoff wurde ein Wasserstoffgehalt im Reaktorgasraum von 1,5 % eingestellt und später dann durch Nachdosierung während der gesamten Propylenpolymerisationszeit konstant gehalten (Gaschromatographie, on-line-Messung). 25 mg des Metallocens Dimethylsilandiyl-(2-methyl-4-phenyl-1-indenyl)(2,3,5-trimethyl-1-cyclopentadienyl)zirkondichlorid wurden in 16 $cm^3$ toluolischer Methylaluminiumoxanlösung (entsprechend 25 mmol Al) gelöst und nach 15 Minuten in den Reaktor gegeben.
Durch Kühlung wurde der Reaktor 5 Stunden bei 50°C Polymerisationstemperatur gehalten. Nach Abgasen von Wasserstoff und Propylen bis auf einen Propylendruck von 1,5 bar im Reaktor, wurden nach Zugabe von 2,0 kg Ethylen weitere 3 Stunden bei 50°C polymerisiert.
Der Reaktorinhalt wurde auf eine Drucknutsche abgelassen, mittels Wasserdampfdestillation wurde das Produkt von Restsuspensionsmittel abgetrennt und 24 Stunden bei 80°C/200 mbar getrocknet.
Es wurden 19,3 kg Blockcopolymerpulver, entsprechend einer Metallocenaktivität von 96,5 kg Copolymer/g Metallocen x h erhalten. Das Blockcopolymer enthielt 8,9 Gew.-% Ethylen, die Fraktionierung ergab enen Gehalt von 19,8 Gew.-% Ethylen/Propylen-Kautschuk, die Glastemperatur des Kautschuks war -52,7°C. Der MFI (230/2) des Gesamtpolymers war 46 dg/min.

Beispiel U

Verwendung eines geträgerten Katalysatorsystems:

a) Herstellung des geträgerten Cokatalysators

Herstellung des geträgerten Cokatalysators erfolgte wie in EP 92 107 331.8 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einem Wärmetauscher am Umpumpsystem. Das Umpumpsystem saugte den Reaktorinhalt über einen Anschluß im Reaktorboden mit einer Pumpe an drückte ihn in einen Mischer und durch eine Steigleitung über einen Wärmetauscher in den Reaktor zurück. Der Mischer war so geschaltet, daß sich in dem Zulauf ein verengter Rohrquerschnitt befand, wo eine erhöhte Strömungsgeschwindigkeit entstand, und in dessen Turbulenzzone axial und entgegen der Strömungsrichtung eine dünne Zuleitung geführt war, durch welche - getaktet - jeweils eine definierte Menge Wasser und 40 bar Argon eingespeist werden konnte. Die Kontrolle der Reaktion erfolgte über einen Probennehmer am Umpumpkreislauf.

Im vorstehend beschriebenen Reaktor mit 16 $dm^3$ Volumen wurden 5 $dm^3$ Decan unter Inertbedingungen vorgelegt. 0,3 $dm^3$ ( = 3,1 mol) Trimethylaluminium wurden bei 25°C zugefügt. Danach wurden 250 g Kieselgel SD 3116-30 (Grace AG), welche vorher bei 120°C in einem Argonfließbett getrocknet wurden, durch einen Feststofftrichter in den Reaktor eindosiert und mit Hilfe des Rührers und des Umpumpsystems homogen verteilt. Eine Gesamtmenge von 45,9 g Wasser wurde in Portionen von 0,1 $cm^3$ während 2 Stunden jeweils alle 15 Sekunen in den Reaktor gegeben. Der Druck, herrührend von Argon und den entwickelten Gasen, wurde durch Druckregelventile konstant bei 10 bar gehalten. Nachdem alles Wasser eingebracht worden war, wurde das Umpumpsystem abgeschaltet und das Rühren noch 5 Stunden bei 25°C forgesetzt. Über eine Drucknutsche wurde das Lösungsmittel entfernt und der Cokatalysatorfeststoff mit Decan gewaschen. Dann wurde im Vakuum getrocknet. Der isolierte Feststoff enthält 19,2 Gew.-% Aluminium. 15 g dieses Festoffes (107 mmol Al) wurden in einem rührbaren Gefäß in 100 $cm^3$ Toluol suspendiert und auf -30°C abgekühlt. Gleichzeitig wurden 200 mg (0,317 mmol) $Me_2$Si(2-methyl-4-phenyl-1-indenyl)(2,3,5-trimethyl-1-cyclopentadienyl)$ZrCl_2$ in 75 $cm^3$ Toluol gelöst und innerhalb von 30 Minuten zur Suspension zugetropft. Es wurde langsam unter Rühren auf Raumtemperatur erwärmt, wobei die Suspension eine rote Farbe annahm. Anschließend wurde eine Stunde bei 40°C gerührt und nach dem Abkühlen auf Raumtemperatur wurde das Gemisch filtriert und der Feststoff 3 mal mit je 100 $cm^3$ Toluol und 1 mal mit 100 $cm^3$ Hexan gewaschen. Der verbleibende, hexanfeuchte Filterrückstand wurde im Vakuum getrocknet. Man erhielt 13,7 g frei fließenden, hellroten, geträgerten Katalysator. Die Analyse ergab einen Gehalt von 10,5 mg Zirkonocen pro Gramm Katalysator.

b) Polymerisation

1,0 g des unter a) hergestellten Katalysators wurden in 25 $cm^3$ eines entaromatisierten Benzinschnittes mit dem Siedebereich 100 bis 120°C suspendiert.

Parallel dazu wurde ein trockener 24 $dm^3$-Reaktor zunächst mit Stickstoff und anschließend mit Propylen gespült und mit 12 $dm^3$ flüssigem Propylen und mit 1,5 $dm^3$ Wasserstoff befüllt. Dannn wurde 3 $cm^3$ Triisobutylaluminium (12 mmol) mit 30 ml Hexan verdünnt, in den Reaktor gegeben und der Ansatz bei 30°C 15 Minuten gerührt. Anschließend wurde die Katalysator-Suspension in den Reaktor gegeben, auf die Polymerisationstemperatur von 80°C aufgeheizt (10°C/min) und das Polymerisationssystem 1 Stunde durch Kühlung bei 80°C gehalten. Gestoppt wurde die Polymerisation durch Zusatz vo 20 ml Isopropanol. Das überschüssige Monomer wurde abgegast, das Polymer im Vakuum getrocknet. Es resultierten 2,28 kg Polypropylen-Pulver. Die Metallocenaktivität betrug somit 217 kg PP/g Met. x h
VZ = 235 $cm^3$/g; $M_w$ = 305000 g/mol, $M_w/M_n$ = 2,2;
MFI (230/2) = 7,4 dg/min; Schmp. 152°C.
Pulvermorphologie: keine Fines < 200 μm, mittlerer Korndurchmesser
$d_{50}$ = 650 μm, enge Korngrößenverteilung s = ln ($d_{50}/d_{16}$) = 0,28, Schüttdichte 485 g/$dm^3$.

## Patentansprüche

**1.** Metallocenverbindung der Formel I

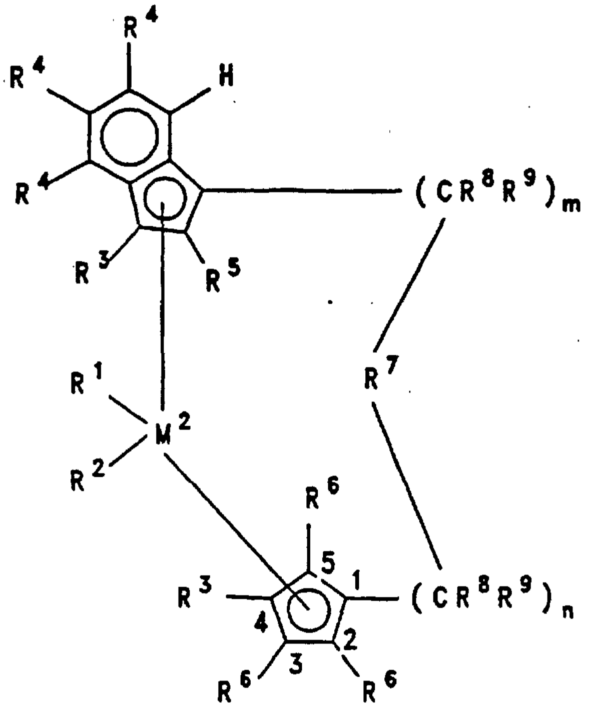

(I)

worin

| | |
|---|---|
| $M^2$ | ein Metall der Gruppe IVb, Vb oder VIb des Periodensystems ist, |
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^4$ | gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, oder zwei oder mehr Reste $R^4$ zusammen mit den sie verbindenden Atomen ein Ringsystem bilden, |
| $R^5$ | ein Wasserstoffatom, ein Halogenatom, eine $C_1$-$C_{10}$-Alkylgruppe, die halogeniert sein kann, eine $C_6$-$C_{10}$-Arylgruppe, eine $C_2$-$C_{10}$-Alkenylgruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^6$ | gleich oder verschieden sind und ein Wasserstoffatom, ein Halogenatom, eine $C_1$-$C_{20}$-Alkylgruppe, die halogeniert sein kann, eine $C_6$-$C_{30}$-Arylgruppe, eine $C_2$-$C_{10}$-Alkenyl- |

gruppe, eine $C_7$-$C_{40}$-Arylalkylgruppe, eine $C_7$-$C_{40}$-Alkyloxygruppe, eine $C_8$-$C_{40}$-Arylalkenylgruppe, einen $-NR_2^{10}$, $-OR^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist,

$R^7$

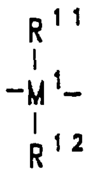 , 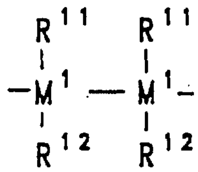 , 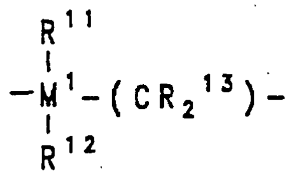 , 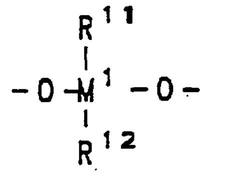 ,

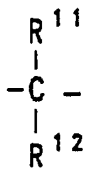 , 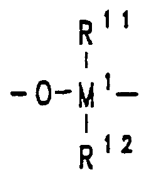 ,

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist,

wobei $R^{11}$, $R^{12}$ und $R^{13}$ gleich oder verschieden sind und ein Wasserstoffatom, ein Halogenatom, eine $C_1$-$C_{20}$-Alkylgruppe, $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden,

$M^1$ Silizium, Germanium oder Zinn ist,

$R^8$ und $R^9$ gleich oder verschieden sind und ein Wasserstoffatom, ein Halogenatom, eine $C_1$-$C_{20}$-Alkylgruppe, eine $C_1$-$C_{20}$-Fluoralkylgruppe, eine $C_6$-$C_{30}$-Arylgruppe, eine $C_6$-$C_{30}$-Fluorarylgruppe, eine $C_1$-$C_{20}$-Alkoxygruppe, eine $C_2$-$C_{20}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^8$ und $R^9$ jeweils mit den sie verbindenden Atomen einen Ring bilden,
m und n gleich oder verschieden sind und null, 1 oder 2 sind, wobei m plus n null, 1 oder 2 ist, **dadurch gekennzeichnet, daß** von den Resten $R^4$ und $R^5$ mindestens einer von Wasserstoff verschieden ist.

2. Metallocenverbindung gemäß Anspruch 1, **dadurch gekennzeichnet, daß** $M^2$ Zirkon ist, $R^1$ und $R^2$ gleich oder verschieden sind und Methyl oder Chlor sind, $R^3$ Wasserstoff ist, $R^4$ ein Wasserstoffatom, eine $C_1$-$C_{20}$-Alkylgruppe oder eine $C_6$-$C_{30}$-Arylgruppe ist, oder zwei oder mehr Reste $R^4$ zusammen mit den sie verbindenden Atomen ein Ringsystem bilden, $R^5$ Wasserstoff oder eine $C_1$-$C_{10}$-Alkylgruppe ist, $R^6$ ein Wasserstoffatom, eine $C_1$-$C_{10}$-Alkylgruppe, eine $C_6$-$C_{20}$-Arylgruppe oder einen Rest $SiR^{10}_3$, worin $R^{10}$ eine $C_1$-$C_{10}$-Alkylgruppe ist, bedeutet, $R^7$ einen Rest

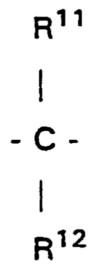 , 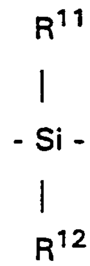 oder 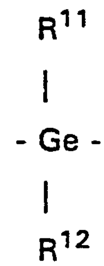

bedeutet, worin $R^{11}$ und $R^{12}$ gleich oder verschieden sind und eine $C_1$-$C_{20}$-Alkylgruppe oder eine $C_6$-$C_{30}$-Arylgruppe sind, $R^8$ und $R^9$ gleich oder verschieden sind und ein Wasserstoffatom oder eine $C_1$-$C_{30}$-Alkylgruppe bedeuten, m plus n null oder 1 bedeutet, und mindestens einer der Reste $R^6$ sowie mindestens einer der Reste $R^5$ und $R^4$ von Wasserstoff verschieden ist.

**3.** Metallocenverbindung gemäß Anspruch 1, **dadurch gekennzeichnet, daß** $M^2$ Zirkon ist, $R^1$ und $R^2$ gleich oder verschieden sind und Methyl oder Chlor sind, $R^3$ Wasserstoff ist, $R^4$ ein Wasserstoffatom, eine $C_1$-$C_{20}$-Alkylgruppe oder eine $C_6$-$C_{30}$-Arylgruppe ist, oder zwei oder mehr Reste $R^4$ zusammen mit dem sie verbindenden Atomen ein Ringsystem bilden, $R^5$ ein Wasserstoffatom oder eine $C_1$-$C_{10}$-Alkylgruppe ist, $R^6$ ein Wasserstoffatom, eine $C_1$-$C_{10}$-Alkylgruppe, eine $C_6$-$C_{20}$-Arylgruppe oder einen Rest $SiR^{10}_3$, worin $R^{10}$ eine $C_1$-$C_{10}$-Alkylgruppe ist, bedeutet, $R^7$ einen Rest

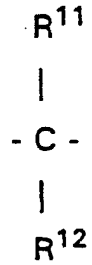 , 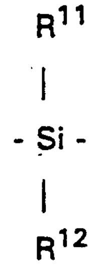 oder 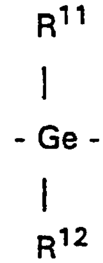

bedeutet, worin $R^{11}$ und $R^{12}$ gleich oder verschieden sind und eine $C_1$-$C_{20}$-Alkylgruppe oder eine $C_6$-$C_{30}$-Arylgruppe sind, $R^8$ und $R^9$ gleich oder verschieden sind und ein Wasserstoffatom oder eine $C_1$-$C_{30}$-Alkylgruppe bedeuten, m + n null oder 1 bedeutet, und mindestens einer der Reste $R^5$ und $R^4$ von Wasserstoff verschieden ist.

**4.** Katalysatorkomponente, enthaltend mindestens eine Metallocenverbindung gemäß einem oder mehreren der Ansprüche 1 bis 3 und mindestens einen Cokatalysator.

**5.** Geträgerte und/oder vorpolymerisierte Katalysatorkomponente, enthaltend mindestens eine Metallocenverbindung gemäß einem oder mehreren der Ansprüche 1 bis 3.

**6.** Verfahren zur Herstellung eines Olefinpolymers durch Polymerisation mindestens eines Olefins in Gegenwart eines Katalysators, welcher mindestens ein Metallocen als Übergangsmetallverbindung und mindestens einen Cokatalysator enthält, **dadurch gekennzeichnet, daß** das Metallocen eine Verbindung der Formel I gemäß Anspruch 1 ist.

**7.** Verfahren gemäß Anspruch 6, **dadurch gekennzeichnet, daß** das Metallocen geträgert und/oder vorpolymerisiert ist.

**8.** Verfahren gemäß Anspruch 6 oder 7, **dadurch gekennzeichnet, daß** als Cokatalysator ein Aluminoxan eingesetzt wird.

**9.** Verfahren gemäß Ansprüche 6 bis 8, wobei als Cokatalysator an Stelle oder neben eines Aluminoxans eine salz-

artige Borverbindung der Formel $R_xNH_{4-x}BR'_4$ oder der Formel $R_3PHBR'_4$, worin x = 1,2 oder 3, R = Alkyl oder Aryl, gleich oder verschieden und R' = Aryl, das auch fluoriert oder teilfluoriert sein kann, verwendet wird.

**10.** Verwendung einer Metallocenverbindung gemäß einem oder mehreren der Ansprüche 1 bis 3 zur Olefinpolymerisation.

**Claims**

**1.** A metallocene compound of the formula I

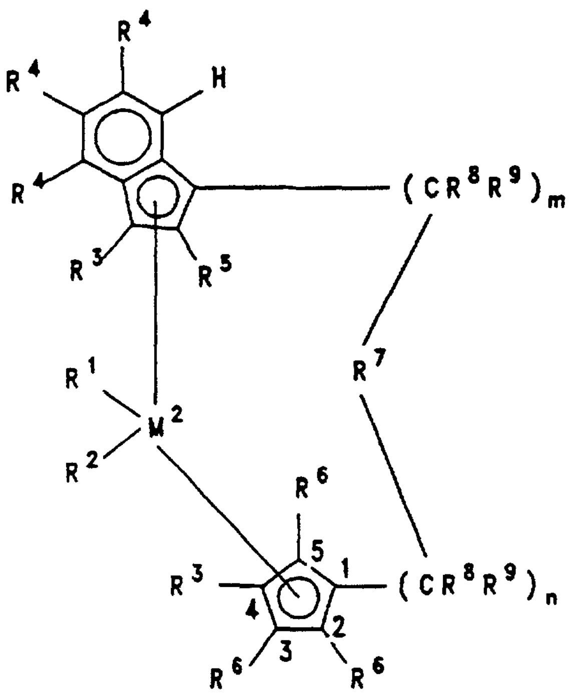

(I)

where

| | |
|---|---|
| $M^2$ | is a metal of the group IVb, Vb or VIb of the Periodic Table, |
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$ | are identical or different and are a hydrogen atom, a halogen atom, a $C_1$-$C_{10}$-alkyl group which can be halogenated, a $C_6$-$C_{10}$-aryl group, a $C_2$-$C_{10}$-alkenyl group, a $C_7$-$C_{40}$-arylalkyl group, a $C_7$-$C_{40}$-alkyloxy group, a $C_8$-$C_{40}$-arylalkenyl group, a $-NR_2^{10}$, $-OR^{10}$, $-SR^{10}$, $-OSiR_3^{10}$, $-SiR_3^{10}$ or $-PR_2^{10}$ radical, where $R^{10}$ is a halogen atom, a $C_1$-$C_{10}$-alkyl group or a $C_6$-$C_{10}$-aryl group, |
| $R^4$ | are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, a $-NR_2^{10}$, $-OR^{10}$, $-SR^{10}$, $-OSiR_3^{10}$, $-SiR_3^{10}$ or $-PR_2^{10}$ radical, where $R^{10}$ is a halogen atom, a $C_1$-$C_{10}$-alkyl group or a $C_6$-$C_{10}$-aryl group, or two or more radicals $R^4$ together with the atoms connecting them form a ring system, |
| $R^5$ | is a hydrogen atom, a halogen atom, a $C_1$-$C_{10}$-alkyl group which can be halogenated, a $C_6$-$C_{10}$-aryl |

group, a $C_2$-$C_{10}$-alkenyl group, a $C_7$-$C_{40}$-arylalkyl group, a $C_7$-$C_{40}$-alkyloxy group, a $C_8$-$C_{40}$-arylalkenyl group, a $-NR_2^{10}$, $-OR^{10}$, $-SR^{10}$, $-OSiR_3^{10}$, $-SiR_3^{10}$ or $-PR_2^{10}$ radical, where $R^{10}$ is a halogen atom, a $C_1$-$C_{10}$-alkyl group or a $C_6$-$C_{10}$-aryl group,

$R^6$ are identical or different and are a hydrogen atom, a halogen atom, a $C_1$-$C_{20}$-alkyl group which can be halogenated, a $C_6$-$C_{30}$-aryl group, a $C_2$-$C_{10}$-alkenyl group, a $C_7$-$C_{40}$-arylalkyl group, a $C_7$-$C_{40}$-alkyloxy group, a $C_8$-$C_{40}$-arylalkenyl group, a $-NR_2^{10}$, $-OR^{10}$, $-SR^{10}$, $-OSiR_3^{10}$, $-SiR_3^{10}$ or $-PR_2^{10}$ radical, where $R^{10}$ is a halogen atom, a $C_1$-$C_{10}$-alkyl group or a $C_6$-$C_{10}$-aryl group,

$R^7$ is

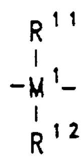 , 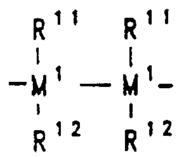 , 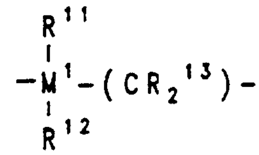 , 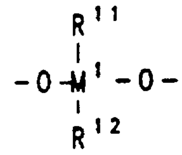 ,

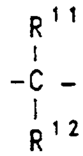 , 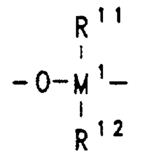 ,

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$, where $R^{11}$, $R^{12}$ and $R^{13}$ are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, or $R^{11}$ and $R^{12}$ or $R^{11}$ and $R^{13}$ in each case together with the atoms connecting them form a ring,

$M^1$ is silicon, germanium or tin,

$R^8$ and $R^9$ are identical or different and are a hydrogen atom, a halogen atom, a $C_1$-$C_{20}$-alkyl group, a $C_1$-$C_{20}$-fluoroalkyl group, a $C_6$-$C_{30}$-aryl group, a $C_6$-$C_{30}$-fluoroaryl group, a $C_1$-$C_{20}$-alkoxy group, a $C_2$-$C_{20}$-alkenyl group, a $C_7$-$C_{40}$-arylalkyl group, a $C_8$-$C_{40}$-arylalkenyl group, a $C_7$-$C_{40}$-alkylaryl group, or $R^8$ and $R^9$ together with the atoms connecting them form a ring,

m and n are identical or different and are zero, 1 or 2, where m plus n is zero, 1 or 2, wherein at least one of the radicals $R^4$ and $R^5$ is not hydrogen.

**2.** A metallocene compound as claimed in claim 1, wherein $M^2$ is zirconium, $R^1$ and $R^2$ are identical or different and are methyl or chlorine, $R^3$ is hydrogen, $R^4$ is a hydrogen atom, a $C_1$-$C_{20}$-alkyl group or a $C_6$-$C_{30}$-aryl group, or two or more radicals $R^4$ together with the atoms connecting them form a ring system, $R^5$ is hydrogen or a $C_1$-$C_{10}$-alkyl group, $R^6$ is a hydrogen atom, a $C_1$-$C_{10}$-alkyl group, a $C_6$-$C_{20}$-aryl group or a radical $SiR^{10}_3$, where $R^{10}$ is a $C_1$-$C_{10}$-alkyl group, $R^7$ is a radical

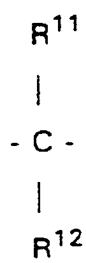 , 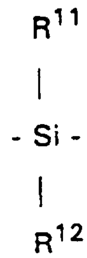 or 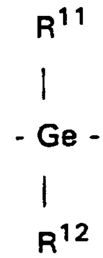

where $R^{11}$ and $R^{12}$ are identical or different and are a $C_1$-$C_{20}$-alkyl group or a $C_6$-$C_{30}$-aryl group, $R^8$ and $R^9$ are identical or different and are a hydrogen atom or a $C_1$-$C_{30}$-alkyl group, m plus n is zero or 1, and at least one of the radicals $R^6$ and also at least one of the radicals $R^5$ and $R^4$ is not hydrogen.

**3.** A metallocene compound as claimed in claim 1, wherein $M^2$ is zirconium, $R^1$ and $R^2$ are identical or different and are methyl or chlorine, $R^3$ is hydrogen, $R^4$ is a hydrogen atom, a $C_1$-$C_{20}$-alkyl group or a $C_6$-$C_{30}$-aryl group, or two or more radicals $R^4$ together with the atoms connecting them form a ring system, $R^5$ is a hydrogen atom or a $C_1$-$C_{10}$-alkyl group, R° is a hydrogen atom, a $C_1$-$C_{10}$-alkyl group, a $C_6$-$C_{20}$-aryl group or a radical $SiR^{10}_3$, where $R^{10}$ is a $C_1$-$C_{10}$-alkyl group, $R^7$ is a radical

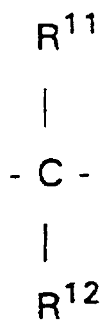 , 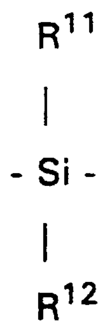 or 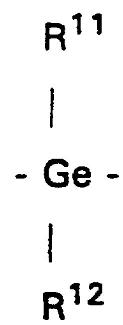

where $R^{11}$ and $R^{12}$ are identical or different and are a $C_1$-$C_{20}$-alkyl group or a $C_6$-$C_{30}$-aryl group, $R^8$ and $R^9$ are identical or different and are a hydrogen atom or a $C_1$-$C_{30}$-alkyl group, m + n is zero or 1, and at least one of the radicals $R^5$ and $R^4$ is not hydrogen.

**4.** A catalyst component containing at least one metallocene compound as claimed in one or more of claims 1 to 3 and at least one cocatalyst.

**5.** A supported and/or prepolymerized catalyst component containing at least one metallocene compound as claimed in one or more of claims 1 to 3.

**6.** A process for preparing an olefin polymer by polymerization of at least one olefin in the presence of a catalyst which contains at least one metallocene as transition metal compound and at least one cocatalyst, wherein the metallocene is a compound of the formula I as claimed in claim 1.

**7.** A process as claimed in claim 6, wherein the metallocene is supported and/or prepolymerized.

**8.** A process as claimed in claim 6 or 7, wherein the cocatalyst used is an aluminoxane.

**9.** A process as claimed in claims 6 to 8 in which a salt-like boron compound of the formula $R_xNH_{4-x}BR'_4$ or the formula $R_3PHBR'_4$, where x = 1, 2 or 3, R = alkyl or aryl, identical or different, and R' = aryl which can also be fluorinated or partially fluorinated, is used as cocatalyst in place of or in addition to an aluminoxane.

**10.** The use of a metallocene compound as claimed in one or more of claims 1 to 3 for olefin polymerization.

**Revendications**

**1.** Composé métallocène de formule I

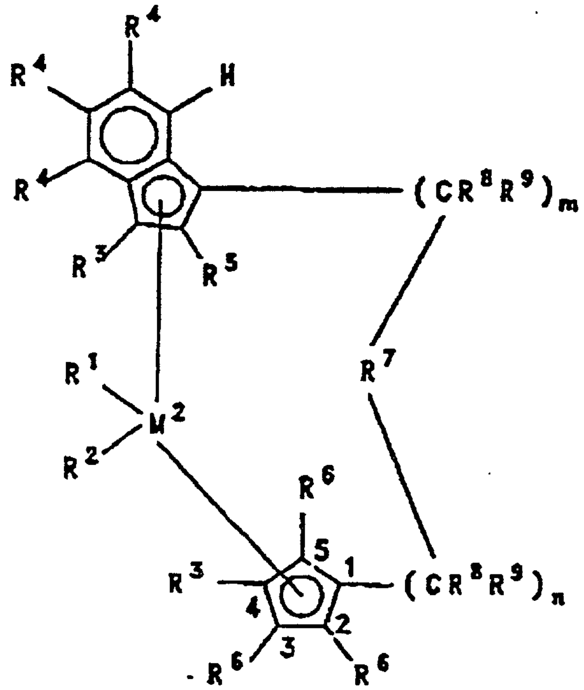

(I)

dans laquelle

$M^2$ représente un atome de métal du groupe IVb, Vb ou VIb de la Classification Périodique des Eléments,
$R^1$ et $R^2$ sont identiques ou différents et représentent un atome d'hydrogène, un groupe alkyle en $C_1$ à $C_{10}$ alkoxy en $C_1$ à $C_{10}$, aryle en $C_6$ à $C_{10}$, aryloxy en $C_6$ à $C_{10}$, alcényle en $C_2$ à $C_{10}$, arylalkyle en $C_7$ à $C_{40}$, alkylaryle en $C_7$ à $C_{40}$, arylalcényle en $C_8$ à $C_{40}$ ou un atome d'halogène,
$R^3$ sont identiques ou différents et représentent un atome d'hydrogène, d'halogène, un groupe alkyle en $C_1$ à $C_{10}$ éventuellement halogéné, aryle en $C_6$ à $C_{10}$, alcényle en $C_2$ à $C_{10}$, arylalkyle en $C_7$ à $C_{40}$, alkyloxy en $C_7$ à $C_{40}$, arylalcényle en $C_8$ à $C_{40}$, un résidu $-NR_2^{10}$, $-OR^{10}$, $-SR^{10}$, $-OSiR_3^{10}$, $-SiR_3^{10}$, ou $-PR_2^{10}$, dans lesquels $R^{10}$ représente un atome d'halogène, un groupe alkyle en $C_1$ à $C_{10}$ ou aryle en $C_6$ à $C_{10}$,
$R^4$ sont identiques ou différents et représentent un atome d'hydrogène, d'halogène, un groupe alkyle en $C_1$ à $C_{20}$, fluoroalkyle en $C_1$ à $C_{20}$, aryle en $C_6$ à $C_{30}$, fluoroaryle en $C_6$ à $C_{30}$, alcoxy en $C_1$ à $C_{20}$, alcényle en $C_2$ à $C_{20}$, arylalkyle en $C_7$ à $C_{40}$, arylalcényle en $C_8$ à $C_{40}$, alkylaryle en $C_7$ à $C_{40}$, un résidu $-NR_2^{10}$, $-OR^{10}$, $-SR^{10}$, $-OSiR_3^{10}$, $-SiR_3^{10}$ ou $-PR_2^{10}$, dans lesquels $R^{10}$ représente un atome d'halogène, un groupe alkyle en $C_1$ à $C_{10}$ ou aryle en $C_6$ à $C_{10}$, ou bien deux ou plusieurs résidus $R^4$ forment, conjointement avec les atomes auxquels ils sont liées, une structure cyclique,
$R^5$ représente un atome d'hydrogène, d'halogène, un groupe alkyle en $C_1$ à $C_{10}$ éventuellement halogéné, aryle en $C_6$ à $C_{10}$, alcényle en $C_2$ à $C_{10}$, arylalkyle en $C_7$ à $C_{40}$, alkyloxy en $C_7$ à $C_{40}$, arylalcényle en $C_8$ à $C_{40}$, un résidu $-NR_2^{10}$,
$-OR^{10}$, $-SR^{10}$, $-OSiR_3^{10}$, $-SiR_3^{10}$ ou $-PR_2^{10}$, dans lesquels $R^{10}$ représente un atome d'halogène, un groupe alkyle en $C_1$ à $C_{10}$ ou aryle en $C_6$ à $C_{10}$,
$R^6$ sont identiques ou différents et représentent un atome d'hydrogène, d'halogène, un groupe alkyle en $C_1$ à $C_{20}$ éventuellement halogéné, aryle en $C_6$ à $C_{30}$, alcényle en $C_2$ à $C_{10}$, arylalkyle en $C_7$ à $C_{40}$, alkyloxy en $C_7$ à $C_{40}$, arylalcényle en $C_8$ à $C_{40}$, un résidu $-NR_2^{10}$, $-OR^{10}$, $-SR^{10}$, $-OSiR_3^{10}$, $SiR_3^{10}$ ou $-PR_2^{10}$, dans lesquels $R^{10}$ représente un atome d'halogène, un groupe alkyle en $C_1$ à $C_{10}$ ou aryle en $C_6$ à $C_{10}$,
$R^7$ représente

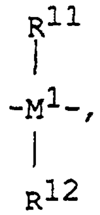 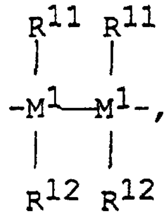 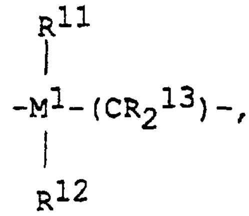 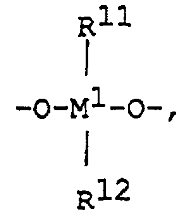

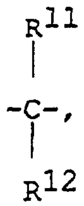 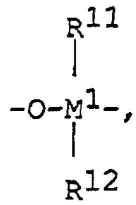

$=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$,
$R^{11}$, $R^{12}$ et $R^{13}$ étant identiques ou différents et représentant un atome d'hydrogène, d'halogène, un groupe alkyle en $C_1$ à $C_{20}$, fluoroalkyle en $C_1$ à $C_{20}$, aryle en $C_6$ à $C_{30}$, fluoroaryle en $C_6$ à $C_{30}$, alcoxy en $C_1$ à $C_{20}$, alcényle en $C_2$ à $C_{20}$, arylalkyle en $C_7$ à $C_{40}$, arylalcényle en $C_8$ à $C_{40}$, alkylaryle en $C_7$ à $C_{40}$, ou bien $R^{11}$ et $R^{12}$ ou $R^{11}$ et $R^{13}$ forment respectivement et conjointement avec les atomes qui les lient une structure cyclique,
$M^1$ représente un atome de silicium, de germanium ou d'étain,
$R^8$ et $R^9$ sont identiques ou différents et représentent un atome d'hydrogène, d'halogène, un groupe alkyle en $C_1$ à $C_{20}$, fluoroalkyle en $C_1$ à $C_{20}$, aryle en $C_6$ à $C_{30}$, fluoroaryle en $C_6$ à $C_{30}$, alcoxy en $C_1$ à $C_{20}$, alcényle en $C_2$ à $C_{20}$, arylalkyle en $C_7$ à $C_{40}$, arylalcényle en $C_8$ à $C_{40}$, alkylaryle en $C_7$ à $C_{40}$, ou bien $R^8$ et $R^9$ forment, conjointement avec les atomes auxquels ils sont liés, une structure cyclique,
m et n sont identiques ou différents et valent zéro, 1 ou 2, et m + n vaut zéro, 1 ou 2, **caractérisé en ce qu'**au moins un des résidus $R^4$ et $R^5$ est différent d'un atome d'hydrogène.

2. Composé métallocène selon la revendication 1, **caractérisé en ce que** $M^2$ représente un atome de zirconium, $R^1$ et $R^2$ sont identiques ou différents et représentent un groupe méthyle ou un atome de chlore, $R^3$ représente un atome d'hydrogène, $R^4$ représente un atome d'hydrogène, un groupe alkyle en $C_1$ à $C_{20}$ ou aryle en $C_6$ à $C_{30}$, ou bien deux ou plusieurs résidus $R^4$ forment, conjointement avec les atomes auxquels ils sont liés, une structure cyclique, $R^5$ représente un atome d'hydrogène ou un groupe alkyle en $C_1$ à $C_{10}$, $R^6$ représente un atome d'hydrogène, un groupe alkyle en $C_1$ à $C_{10}$, aryle en $C_6$ à $C_{20}$ ou un résidu $SiR^{10}_3$, dans lequel $R^{10}$ représente un groupe alkyle en $C_1$ à $C_{10}$, $R^7$ représente un résidu

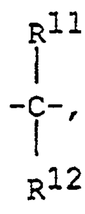 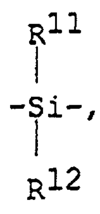 ou 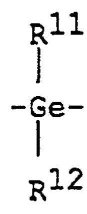

dans lequel $R^{11}$ et $R^{12}$ sont identiques ou différents et représentent un groupe alkyle en $C_1$ à $C_{20}$, aryle en $C_6$ à $C_{30}$, $R^8$ et $R^9$ sont identiques ou différents et représentent un atome d'hydrogène ou un groupe alkyle en $C_1$ à $C_{30}$, m plus n est égal à zéro ou à 1, et au moins un des résidus $R^6$ ainsi qu'au moins un des résidus $R^4$ et $R^5$ est différent d'un atome d'hydrogène.

3. Composé métallocène selon la revendication 1, **caractérisé en ce que** $M^2$ représente un atome de zirconium, $R^1$ et $R^2$ sont identiques ou différents et représentent un groupe méthyle ou un atome de chlore, $R^3$ représente un atome d'hydrogène, $R^4$ représente un atome d'hydrogène, un groupe alkyle en $C_1$ à $C_{20}$ ou aryle en $C_6$ à $C_{30}$,

deux ou plusieurs résidus $R^4$ forment, conjointement avec les atomes auxquels ils sont liés, une structure cyclique, $R^5$ représente un atome d'hydrogène ou un groupe alkyle en $C_1$ à $C_{10}$, $R^6$ représente un atome d'hydrogène, un groupe alkyle en $C_1$ à $C_{10}$, aryle en $C_6$ à $C_{20}$ ou un résidu $SiR^{10}_3$, dans lequel $R^{10}$ représente un groupe alkyle en $C_1$ à $C_{10}$, $R^7$ représente un résidu

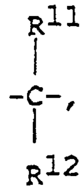, 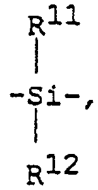, ou 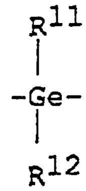

dans lequel $R^{11}$ et $R^{12}$ sont identiques ou différents et représentent un groupe alkyle en $C_1$ à $C_{20}$, aryle en $C_6$ à $C_{30}$, $R^8$ et $R^9$ sont identiques ou différents et représentent un atome d'hydrogène ou un groupe alkyle en $C_1$ à $C_{30}$, m + n est égal à zéro ou à 1, et au moins un des résidus $R^4$ et $R^5$ est différent d'un atome d'hydrogène.

**4.** Composant de catalyseur contenant au moins un composé métallocène selon une ou plusieurs des revendications 1 à 3 et au moins un co-catalyseur.

**5.** Composant de catalyseur prépolymère et/ou doté d'un porteur, contenant au moins un composé métallocène selon une ou plusieurs des revendications 1 à 3.

**6.** Procédé de préparation d'un polymère d'oléfine par le moyen de la polymérisation d'au moins une oléfine en présence d'un catalyseur contenant en tant que composé de métal de transition au moins un métallocène, et au moins un co-catalyseur, **caractérisé en ce que** le métallocène est un composé de formule I selon la revendication 1.

**7.** Procédé selon la revendication 6, **caractérisé en ce que** le métallocène est prépolymérisé et/ou doté d'un porteur.

**8.** Procédé selon la revendication 6 ou 7, **caractérisé en ce que** l'on met en oeuvre en tant que co-catalyseur un aluminoxane.

**9.** Procédé selon les revendications 6 à 8, **caractérisé en ce que** l'on met en oeuvre en tant que co-catalyseur à la place de ou bien conjointement avec l'aluminoxane, un composé boré salin de formule $R_XNH_{4-X}BR'_4$ ou bien de formule $R_3PHBR'_4$, dans lesquelles x = 1 ou 2 ou 3, R représente un groupe alkyle ou aryle qui sont identiques ou différents, et R' représente un groupe aryle éventuellement fluoré ou partiellement fluoré.

**10.** Mise en oeuvre d'un composé métallocène selon une ou plusieurs des revendications 1 à 3 pour la polymérisation d'oléfines.